# EUROPÄISCHE PATENTANMELDUNG

(11) **EP 4 417 283 A1**
(43) Veröffentlichungstag der Anmeldung: **21.08.2024**
(21) Anmeldenummer: 23157584.6
(22) Anmeldetag: 20.02.2023
(51) Int. Cl.: B01D 3/08, B01D 3/42, B01D 3/10, B01D 5/00

(54) **ROTATIONSVERDAMPFER UND STEUERMODUL HIERFÜR**

(71) Anmelder: Hans Heidolph GmbH, 93309 Kelheim (DE)
(72) Erfinder: Löschel, Robert, 91126 Schwabach (DE); Dr. Weber, Immo, 91052 Erlangen (DE)
(74) Vertreter: Stolmár & Partner Patentanwälte PartG mbB

(57) **Zusammenfassung**

Die Erfindung betrifft einen Rotationsverdampfer (**1**), welcher zur automatischen Durchführung von Entlastungsschritten während eines Gesamtprozesses, insbesondere bei einer Destillation ausgebildet ist. Mit den Entlastungsschritten (III) bis (VI) ist eine vollständige Entfernung von Restanteilen an kondensiertem Destillat an der Eingangsverbindung (**71**) des Zwischenventils (**7**) und im Kühler (**5**) des Rotationsverdampfers (**1**) bewerkstelligbar. Der Rotationsverdampfer (**1**) weist ein elektronisches Steuermodul (**9**) auf, welches zur automatischen Durchführung der Entlastungsschritte und weiterer Prozessschritte mit dem Rotationsverdampfer (**1**) ausgebildet und programmiert ist.

## Beschreibung

### Gebiet der Technik

Die Erfindung betrifft einen Rotationsverdampfer zum Verdampfen und zur Kondensierung von Flüssigkeiten oder Flüssigkeitsmischungen unter Druckreduktion.

Die Erfindung betrifft im Speziellen einen Rotationsverdampfer, welcher ein Steuermodul ausgebildet zur elektronischen Steuerung eines Systemdruck-Erzeugers und eines Zwischenventils aufweist, sowie das Steuermodul selbst. Hierbei ist das Steuermodul zur automatischen Durchführung zeitlich aufeinanderfolgender Regelungsschritte zur Einstellung des Systemdruckes sowie zum Öffnen und Schließen des Zwischenventils ausgebildet.

Weiter betrifft die Erfindung ein Destillationsverfahren, welches mit dem vorgeschlagenen Rotationsverdampfer durchführbar ist.

### Stand der Technik und Definitionen

Die Auftrennung von homogenen oder heterogenen Flüssigkeitsgemischen in Fraktionen mittels Destillation unter Druckreduktion, welche auch das Eindampfen von Feststoff-Lösungen, die Trocknung von Feststoffen oder von Feststoffgemischen sowie die Zersetzung Stoffen in flüchtige Komponenten umfasst, gehört zu den Grundoperationen in der chemischen Verfahrenstechnik und in der Laborpraxis.

Elektronisch regelbare Rotationsverdampfer weisen einen Systemdruckerzeuger, einen Verdampfungskolben, einen Kühler, mindestens einen Sammelkolben, ein elektronisches Steuermodul und optional ein Zwischenventil auf. Der elektronisch regelbare Systemdruck-Erzeuger weist als eine Baugruppe eine elektronisch steuerbare Vakuumpumpe, elektronisch steuerbare Ventile und ein elektronisch auslesbares Manometer auf. Das Steuermodul ist zur elektronischen Steuerung des Systemdruck-Erzeugers und optional zur elektronischen Steuerung eines Zwischenventils und/oder zur Regelung eines Temperierbades und/oder der Rotationsgeschwindigkeit des Verdampfungskolbens ausgebildet. Rotationsverdampfer sind beispielsweise in dem Lehrbuch: Walter Wittenberger, Chemische Laboratoriumstechnik, 7. Auflage, Springer-Verlag Wien / New York 1973, Seite 186 - 187 und in dem Lehrbuch: Klaus Schwetlik (Autor), Heinz G. O. Becker, Werner Berger, Günter Domschke, Organikum: organisch-chemisches Grundpraktikum, 23. Auflage, Wiley-VCH Weinheim 2009 beschrieben.

Der Systemdruck (nachfolgend als: ps bezeichnet oder abgekürzt) einer Destillationsvorrichtung und damit eines Rotationsverdampfers entspricht dem Durchschnittsgasinnendruck, welcher in dem Innenraum der Destillationsvorrichtung während deren Betriebs, beispielsweise bei der Durchführung einer Destillation, an einem Zeitpunkt oder bei einer Zeit (nachfolgend als: t bezeichnet oder abgekürzt) gegeben ist.

Unter einem Gesamtprozess wird nachfolgend allgemein eine Destillation unter Druckreduzierung innerhalb eines Gesamtzeitabschnittes (nachfolgend als: ΔT_{ges} bezeichnet oder abgekürzt) verstanden, wobei die Destillation n Schritte i umfasst, n einer natürlichen Zahl entspricht und i als natürliche Zahl einer Indexzahl zwischen 1 und n entspricht (i = {1 ,.... n}). Jeder Schritt i umfasst m Zeitabschnitte (nachfolgend als: Δtⱼᵢ bezeichnet oder abgekürzt), wobei m wieder einer natürlichen Zahl entspricht und j als natürliche Zahl einer Indexzahl zwischen 1 und m entspricht (j = {1 ,.... m}).

Der Gesamtprozess einer Destillation umfasst somit die Absenkung des Systemdruckes ps ausgehend von einem Anfangsdruck (nachfolgend als: p_{A} bezeichnet oder abgekürzt) im ersten Zeitabschnitt Δt₁₁ des ersten Schrittes (j = 1; i = 1) auf einen Enddruck (nachfolgend als: pε bezeichnet oder abgekürzt) in dem letzten Zeitabschnitt Δtₘₙ des letzten Schrittes (j = m; i = n), das heißt, insgesamt in einem oder mehreren Zeitabschnitten Δtⱼᵢ innerhalb des Gesamtzeitabschnittes ΔT_{ges}, wobei der letzte Zeitabschnitt Δtₘₙ nachfolgend als Endzeitabschnitt (auch als: Δtε abgekürzt) bezeichnet ist. Bei einem solchen Gesamtprozess entspricht der Anfangsdruck p_{A} maximal dem jeweils herrschenden Atmosphärendruck, das heißt etwa 1000 mbar. In dem Innenraum eines Rotationsverdampfers ist mittels des Systemdruck-Erzeugers als Enddruck pε ein reduzierter Druck von bis zu 2 × 10⁻³ mbar realisierbar. Ein Zeitabschnitt Δtⱼᵢ umfasst hierbei eine Anpassung des Systemdruckes ps an einen Druck-Sollwert oder ein Halten des Systemdruckes ps auf einem Druck-Sollwert, wobei die Summe aller Zeitabschnitte Δtⱼᵢ dem Gesamtzeitabschnitt ΔT_{ges} entspricht.

Ein Gesamtprozess ist also mindestens einschrittig (n = 1; i = 1) und weist mindestens einen Zeitabschnitt Δt₁₁ auf (m = 1; j = 1), wobei in diesem Fall der Zeitabschnitt Δt₁₁ dem Endzeitabschnitt Δtε entspricht.

Es sind elektronisch regelbare Rotationsverdampfer bekannt, deren Steuermodul zur automatischen Durchführung von Regelungsschritten jeweils in Zeitabschnitten Δtⱼᵢ ausgebildet sind. Hierbei sind auf den Steuermodul durch Programmierung die Reihenfolge der Ausführung dieser Regelungsschritte bezüglich einer Anpassung des Systemdruckes ps an einen einzustellenden Druck-Sollwert oder eines Haltens des Systemdruckes ps auf einen einzustellenden Druck-Sollwert festgelegt. Zur automatischen Durchführung eines Gesamtprozesses sind daher auf dem Steuermodul nachfolgende Parameter einstellbar:
- der Anfangsdruck p_{A} und der Enddruck p_{E},
- die einzelnen Zeitabschnitte Δtⱼᵢ und der Endzeitabschnitt Δt_{E} jeweils als Zeitlängen oder, sofern nicht auf dem Steuermodul durch Programmierung festgelegt, als Umschaltzeiten,
- konstante Druck-Sollwerte p_{Sji} für einzelne Zeitabschnitte Δtⱼᵢ,
- sofern nicht auf dem Steuermodul durch Programmierung festgelegt, einzelne Zeitabschnitte Δtⱼᵢ bezüglich einer Anpassung des für einen vorgelagerten Zeitabschnitt, das heißt: Δt₍ₘ₋₁₎ᵢ oder Δtₘ₍ᵢ₋₁₎, eingestellten konstanten Druck p_{S(m-1)i} oder p_{Sm(i-1)} auf einen für einen nachgelagerten Zeitabschnitt, das heißt: Δtₘᵢ oder Δt₁ᵢ, eingestellten konstanten Druck psmi oder psii,
- sofern nicht auf dem Steuermodul durch Programmierung festgelegt, Endzeitabschnitt Δt_{E} bezüglich der Anpassung des für den vorletzten Zeitabschnitt Δt₍ₘ₋₁₎ₙ eingestellten konstanten Druck p_{S(m-1)n} auf den Enddruck p_{E}.

Unter einer Umschaltzeit wird daher ein solcher Zeitabschnitt Δtⱼᵢ verstanden, in welchem von einem aktuellen oder voreingestellten Wert des Systemdruckes ps ein Sollwert des Systemdruckes ps auf direktem und technisch schnellstmöglichem Wege, das heißt in technisch kürzest möglicher Zeit erreichbar ist. Somit ist bei einem Rotationsverdampfer die benötigte Umschaltzeit bei einer Drucksenkung abhängig von der allgemeinen Geräteleistung der Vakuumpumpe des Systemdruck-Erzeugers und bei der Druckerhöhung von der Leistungsfähigkeit des Belüftungsventils des Systemdruck-Erzeugers. Innerhalb des Druckintervalls von 1000 mbar bis 2 × 10⁻³ mbar ist keine konstante Druckumschaltgeschwindigkeit gegeben, das heißt: der Quotient aus einer zu überwindenden Druckdifferenz und der dafür benötigten Zeit ist innerhalb dieses Druckintervalls nicht konstant. Als typische Orientierungswerte für Umschaltzeiten gelten: Eine Druckerniedrigung von 1000 mbar auf 5 mbar ist in etwa 1 min 40 s bis 2 min, eine Druckerniedrigung von 5 mbar auf 2 × 10⁻³ mbar ist in etwa 5 min bis 10 min, eine Druckänderung um 100 mbar oberhalb von 5 mbar ist in etwa 1 s bis 3 s und eine Druckänderung um 10 mbar oberhalb von 5 mbar ist in etwa 10⁻³ s bis 1 s bewerkstelligbar.

Unter einem Prozessdruck (nachfolgend als: p_{Pi} bezeichnet oder abgekürzt) eines Schrittes i wird allgemein der für einen Zeitabschnitt Δtₘᵢ eingestellte konstante Systemdruck psmi verstanden, bei welchem eine gewünschte Operation, insbesondere bezüglich der Verdampfung einer Flüssigkeit oder Flüssigkeitsmischung aus dem Verdampfungskolben, durchführbar ist. Beispielsweise ist zur destillativen Auftrennung einer Flüssigkeitsmischung der Prozessdruck p_{Pi} auf den Siededruck (nachfolgend als: p_{Bi} bezeichnet oder abgekürzt) einer Fraktion eingestellt. Beispielsweise ist bei der Endphase der Trocknung eines Feststoffes der Prozessdruck p_{Pi} weit unterhalb des Siededruckes p_{Bi} des flüssigen Lösemittels eingestellt, mit welchem des Feststoff vermischt ist. Zur vollständigen Entfernung einer leichter flüchtigen Komponente aus einer flüssigen Zweikomponentenmischung ist der Prozessdruck p_{Pi} ebenfalls weit unterhalb des Siededruckes p_{Bi} der flüchtigen Komponente eingestellt.

Jede Fraktion einer Destillation weist mindestens eine Komponente, beispielsweise in Form einer Reinsubstanz oder eines Molekülassoziates, oder eine Mischung mehrerer Komponenten auf. Weisen mehrere Komponenten einer zu destillierenden Flüssigkeitsmischung, welche im Verdampfungsbehälter enthalten ist, gleiche oder ähnliche Siededrücke auf, so sind diese Siededrücke systembedingt als ein einziger gemittelter Siededruck p_{Bi} messbar. Dies ist insbesondere bei Vorliegen eines Azeotrops der Fall. Ist somit nachfolgend von dem Siededruck p_{Bi} einer Fraktion die Rede, so schließt dies einen gemittelten Siededruck einer Mischung mehrerer Komponenten mit ein.

Elektronisch regelbare Rotationsverdampfer weisen ein elektronisches Steuermodul auf, welches zur automatischen einmaligen oder mehrmaligen Durchführung der nachfolgenden Prozessschritte (I) und (II) in der angegebenen Reihenfolge innerhalb eines Schrittes i von jeweils n aufeinanderfolgenden Schritten ausgebildet ist:
(I) Senkung des aktuellen Systemdruckes ps von dem Anfangsdruck p_{A} oder von dem Schrittprozessdruck p_{P(i-1)} des dem Schritt i vorgelagerten Schrittes (i-1) auf einen Prozessdruck p_{Pi} innerhalb eines ersten Zeitabschnittes Δt₁ᵢ,
(II) Halten des Prozessdruckes p_{Pi} für einen zweiten Zeitabschnitt Δt₂ᵢ in dem Schritt i und danach Prozessschritt (I) gefolgt von dem Prozessschritt (II) für jeweils den dem Schritt i nachgelagerten Schritt (i+1) und nach Durchlaufen des letzten Schrittes (i = n) Absenkung des letzten Prozessdruckes p_{Pn} auf einen Enddruck p_{E} in einem Endzeitabschnitt Δt_{E}.

Hierbei ist auf dem Steuermodul der erste Zeitabschnitt Δt₁ᵢ einstellbar oder als eine eine Umschaltzeit festlegbar oder festgelegt. Mit einem solchen elektronisch regelbaren Rotationsverdampfer ist eine fraktionierte Destillation durchführbar. Jeder Prozessdruck p_{Pi} ist hierbei auf den Siededruck p_{Bi} der im betreffenden Schritt i erhältlichen Fraktion auf dem Steuermodul eingestellt. Jeder Prozessdruck p_{Pi} eines Schrittes i ist kleiner als der Prozessdruck p_{P(i-1)} des dem Schritt i jeweils vorgelagerten Schrittes (i-1). Folglich sind in dem Gesamtzeitabschnitt Δt_{ges} n Schritte i, n Prozessdrücke p_{Pi} und somit n Siededrücke p_{Bi} durchlaufen, wobei n der Anzahl der trennbaren oder der zu trennenden Fraktionen einer Flüssigkeitsmischung entspricht. Der Gesamtzeitabschnitt Δt_{ges} ist somit aus dem ersten Zeitabschnitt Δt₁ᵢ und dem zweiten Zeitabschnitt Δt₁ᵢ eines jeden Schrittes i zusammengesetzt.

Unter einem Display wird nachfolgend ein Bauteil verstanden, welches allgemein eine Vorrichtung zur Visualisierung oder zur optischen Signalisierung von veränderlichen Informationen, wie Zustände und Werte, insbesondere von Messwerten umfasst. Ein elektronisches Display ist beispielsweise durch einen Bildschirm gegeben, auf welchem die veränderlichen Informationen visualisierbar sind. Unter einem Touchscreen wird nachfolgend eine berührungsempfindliche Oberfläche verstanden, mit welcher eine schnelle und gezielte Eingabe von Daten in ein technisches Gerät bewerkstelligbar ist. Gewöhnlich weisen elektronische Steuermodule von Rotationsverdampfern optional ein elektronisches Display auf, welches zur Einstellung über einen elektronischen Touchscreen, zur Anzeige und zur graphischen Darstellung von Regelungsschritten ausgebildet ist. Hierbei ist der Touchscreen Bestandteil des Displays.

Bei Rotationsverdampfern, bei welchen ein Sammelkolben direkt mit dem Kühler verbunden ist, ist ein Rücksieden und/oder Rückschlagen des Destillates aus dem Sammelkolben in den Kühler nahezu unvermeidlich, falls ein Prozessdruck p_{Pi} unterhalb des Siededruckes p_{Bi} des Destillates gewählt ist. Dies ist durch ein Zwischenventil zwischen dem Kühler und dem Sammelkolben dann vermeidbar, wenn dieses bei einem Prozessdruck p_{Pi} unterhalb des Siededruckes p_{Bi} des Destillates verschlossen ist.

Ein solches Zwischenventil weist eine Eingangsverbindung zu dem Kühler und eine Ausgangsverbindung zu einem Sammelkolben auf. Hierbei ist das Zwischenventil zur jeweils wahlweisen, das heißt schaltbaren Abtrennung eines Sammelkolbens von dem Kühler durch Verschließen und zur Verbindung des Sammelkolbens mit dem Kühler durch Öffnen ausgebildet. Somit ist das Zwischenventil zum Ablassen eines Destillates oder einer Fraktion eines Destillates in einen Sammelkolben vorgesehen.

Im einfachsten Fall ist dies durch ein Zwischenventil realisierbar, welches als mechanisches Rückschlagventil zum automatischen Verschluss bei einem Unterduck im Kühler als auch im Verdampfungskolben und bei einem Überdruck in dem betreffenden Sammelkolben aufgrund eines Rücksiedens oder Rückschlages des Destillates ausgestaltet ist. Diese Lösung ist jedoch nur bedingt tauglich, da während des Verschließens des Zwischenventils immer noch ein Rückschlagen eines Restanteiles des Destillates gegeben ist. Ein solches Rückschlagventil ist bezüglich seiner Funktion jedoch nicht weiter beeinflussbar, das heißt steuerbar, sondern lediglich zum automatischen Verschluss des Sammelkolbens im Falle eines plötzlichen Überdruckes in dem Sammelkolben ausgebildet. Somit führt ein solches mechanisches Rückschlagventil zu erheblichen unvorteilhaften und nicht weiter beeinflussbaren Druckschwankungen während der Durchführung eines Prozesses.

Mit einem elektronisch steuerbaren Zwischenventil ist jedoch ein Verschließen oder Öffnen der Eingangsverbindung unabhängig von dem jeweils herrschenden Druck im Sammelkolben und im Kühler schaltbar. Vor Erreichen eines Prozessdruckes p_{Pi} ist somit durch Verschließen der Eingangsverbindung vor oder bei dem Unterschreiten des Siedepunktes p_{Bi} eines Destillates ein Rücksieden oder Rückschlagen des Destillates aus dem Sammelkolben vermeidbar. Vorzugsweise ist daher das Zwischenventil als elektronisch schaltbares Magnetventil ausgebildet. Ein Öffnen und Verschließen ist somit über einen Gesamtprozess je nach Zweck frei wählbar oder steuerbar.

Die Baugröße des Zwischenventils und damit der Eingangsverbindung ist zum Erzielen einer möglichst kurzen Schaltzeit, welche für das Verschließen oder das Öffnen des Zwischenventils erforderlich ist, limitiert und ist daher möglichst klein zu gestalten. Dies führt jedoch während der Durchführung eines Prozesses mit dem Rotationsverdampfer oft zu einer Akkumulation von Destillat in dem Kühler und vor allem vor und an der Eingangsverbindung, selbst bei geöffnetem Zwischenventil, da das Destillat aufgrund der geringen Größe der Eingangsverbindung nicht schnell genug und damit nicht vollständig in den Sammelkolben abfließen kann. Dieser Effekt ist insbesondere bei Destillaten mit einer hohen Viskosität und/oder Oberflächenspannung und/oder mit einem hohen Siedepunkt beobachtbar. Dieser Effekt bewirkt bei einer fraktionierten Destillation nur eine partielle Trennung, das heißt teilweisen Vermischung verschiedener Fraktionen schon innerhalb des Kühlers während eines Destillationsprozesses. Eine Akkumulation von Destillat in dem Kühler und an der Eingangsverbindung des Zwischenventils zwingt daher oft zu einem Abbruch der Destillation durch Belüftung des Rotationsverdampfers.

### Technische Aufgabe

Der Erfindung liegt die Aufgabe zugrunde, einen im Vergleich zum Stand der Technik verbesserten Rotationsverdampfer zur Verfügung zu stellen, bei dem eine Akkumulation des Destillats im Kühler und/oder im Zwischenmodul vermeidbar und/oder ohne großen Aufwand behebbar ist.

### Lösung der Aufgabe

Der erfindungsgemäße Rotationsverdampfer ist zur Abtrennung von Fraktionen einer Flüssigkeit oder Flüssigkeitsmischung durch Destillation ausgebildet. Mit dem Rotationsverdampfer sind sowohl homogene als auch heterogene Flüssigkeitsmischungen auftrennbar. Dies schließt die Abtrennung von Lösemitteln von homogenen Feststofflösungen sowie die Trocknung von Feststoffen oder Feststoffgemischen zur Isolierung von Feststoffen oder Feststoffgemischen mit ein.

Der erfindungsgemäße elektronisch regelbare Rotationsverdampfer weist einen Verdampfungskolben, optional ein Temperierbad, einen Kühler, einen Systemdruck-Erzeuger zur Erzeugung eines Systemdruckes ps, ein Zwischenventil, mindestens einen Sammelkolben und ein Steuermodul auf. Der Kühler ist sowohl mit dem Systemdruck-Erzeuger als auch mit dem Zwischenventil verbunden. Das Zwischenventil ist direkt oder indirekt mit jedem Sammelkolben verbunden.

Der Verdampfungskolben ist mit einem Dampfrohr verbunden, wobei das Dampfrohr durch eine Wellendichtung in den Kühler geführt ist. Alternativ ist der Verdampfungskolben über einen Flanschanschluss direkt mit der Wellendichtung direkt verbunden. Der Verdampfungskolben ist mittels eines Elektromotors in Rotation versetzbar.

Der Verdampfungskolben ist zur Aufnahme einer Flüssigkeit, insbesondere eines aufzutrennenden Flüssigkeitsgemisches vorgesehen. Der Verdampfungskolben ist beispielsweise als Glaskolben oder allgemein als geeigneter Verdampfungsbehälter ausgebildet.

Das Temperierbad des erfindungsgemäßen Rotationsverdampfers ist als bezüglich einer Temperatur elektronisch regelbare Heiz- oder Kühlvorrichtung ausgeführt, in welcher bei Betrieb des Rotationsverdampfers der Verdampfungskolben einliegt und über ein Temperiermedium, insbesondere Wasser oder Öl, bezüglich seines Inhaltes erwärmbar oder kühlbar ist. Alternativ zu einer Flüssigkeit als Temperiermedium ist ein wärmeübertragender pulver- oder granulatförmiger Feststoff, ein wärmeübertragender Thermoplast oder Luftstrom verwendbar.

Der Kühler ist zur Ableitung eines flüssigen Destillates über das Zwischenventil in den oder in die Sammelbehälter und beispielsweise als Spiralkühler, durch dessen Innenraum eine Kühlspirale geführt ist, ausgebildet. Der Kühler ist mittels einer auf eine konstante Temperatur temperierten und kontinuierlich durch die Kühlspirale geleiteten Kühlflüssigkeit kühlbar. Dies ist beispielsweise mit einem Umwälzkühler bewerkstelligbar. Der Kühler und die Kühlspirale bilden ein Einzelteil aus und sind beispielsweise als zusammengesetztes Bauteil aus Glas oder einem anderen geeigneten Material gefertigt. Bei einer Destillation ist die Temperatur der Kühlspirale des Kühlers stets niedriger gehalten als die des Temperiermediums.

Jeder Sammelkolben ist zur Aufnahme eines Destillates, insbesondere von destillativ abgetrennten Fraktionen einer Flüssigkeit oder Flüssigkeitsmischung, vorgesehen. Ein Sammelkolben ist beispielsweise als Glaskolben oder allgemein als geeigneter Sammelbehälter ausgebildet.

Der elektronisch regelbare Systemdruck-Erzeuger weist als eine Baugruppe eine elektronisch steuerbare Vakuumpumpe, ein elektronisch steuerbares Regelungsventil, optional ein elektronisch steuerbares Belüftungsventil und ein elektronisch auslesbares Manometer auf, wobei mit dem Manometer der Systemdruck messbar ist. Die Vakuumpumpe ist beispielsweise in Form einer elektrischen Membranpumpe oder einer Drehschieberpumpe ausgebildet. Das elektronisch auslesbare Manometer ist beispielsweise als elektronische Pirani-Sonde ausgebildet. Das Regelungsventil ist beispielsweise als elektronisch steuerbares Magnetventil ausgebildet.

Das elektronisch regelbare Zwischenventil ist zur wahlweisen, das heißt schaltbaren Abtrennung eines jeden Sammelkolbens von dem Kühler ausgebildet und zum Ablassen eines Destillates in jeden Sammelkolben vorgesehen.

Das Steuermodul ist elektronisch, wahlweise über elektrische Leitungen und/oder über ein Funknetz in Form eines drahtlosen lokalen Netzwerkes (Englisch WLAN = Wireless Local Area Network), mit der Vakuumpumpe, dem Regelungsventil, dem Belüftungsventil, dem Zwischenventil und optional mit dem Temeperierbad und/oder dem Elektromotor verbunden. Mit dem Steuermodul ist der Systemdruck ps über die elektronisch steuerbare Vakuumpumpe, über das elektronisch steuerbare Regelungsventil und über das optionale elektronisch steuerbare Belüftungsventil anhand der aus dem Manometer elektronisch ausgelesenen Werte des elektronisch regelbaren Systemdruck-Erzeugers einstellbar. Optional ist das Steuermodul zur Regelung des Temperierbades und/oder der Rotationsgeschwindigkeit des Verdampfungskolbens ausgebildet. Optional weist das Steuermodul ein elektronisches Display mit einem elektronischen Touchscreen auf.

Die vorstehend genannte Aufgabe wird gelöst, indem das elektronische Steuermodul des erfindungsgemäßen Rotationsverdampfers zur automatischen Durchführung nachfolgender Entlastungsschritte (III) bis (VII) in der angegeben Reihenfolge innerhalb eines Schrittes i oder als ein separater Schritt i von jeweils n aufeinanderfolgenden Schritten eines Gesamtprozesses ausgebildet und programmiert ist:
(III) bei geöffnetem Zwischenventil Senkung eines ersten Systemdruckes (nachfolgend als: psii bezeichnet oder abgekürzt) auf einen ersten Grenzdruck (nachfolgend als: p_{Gai} bezeichnet oder abgekürzt) innerhalb eines vorausgehenden entlastenden Zeitabschnittes (nachfolgend als: Δt₃ᵢ bezeichnet oder abgekürzt),
(IV) bei geöffnetem Zwischenventil Erhöhung des des aktuellen Systemdruckes ps, also p_{S} = p_{Gai}, von dem ersten Grenzdruck p_{Gai} auf einen Haltedruck (nachfolgend als: p_{Hi} bezeichnet oder abgekürzt) in einem nachfolgenden entlastenden Zeitabschnitt (nachfolgend als: Δt₄ᵢ bezeichnet oder abgekürzt),
(V) bei geöffnetem Zwischenventil Halten des Haltedruckes p_{Hi} für einen nächsten entlastenden Zeitabschnitt (nachfolgend als: Δt₅ᵢ bezeichnet oder abgekürzt),
(VI) bei geöffnetem Zwischenventil Senkung Haltedruckes p_{Hi} auf einen zweiten Grenzdruck (nachfolgend als: p_{Gbi} bezeichnet oder abgekürzt) in einem weiteren entlastenden Zeitabschnitt (nachfolgend als: Δt₆ᵢ bezeichnet oder abgekürzt) und bei Erreichen des zweiten Grenzdruckes p_{Gbi} Schließen des Zwischenventils,
(VII) bei geschlossenem Zwischenventil Regelung des zweiten Grenzdruckes p_{Gbi} auf einen zweiten Systemdruck (nachfolgend als: p_{S2i} bezeichnet oder abgekürzt) innerhalb eines abschließenden entlastenden Zeitabschnittes (nachfolgend als: Δt₇ᵢ bezeichnet oder abgekürzt).

Die Schrittzahl i entspricht einem Index, das heißt, einem mathematischen Nummerierungselement. Die Schrittzahl i ist eine natürliche Zahl von 1 bis n, wobei n ebenfalls einer natürlichen Zahl von 1 bis zur Anzahl der mit dem Rotationsverdampfer durchführbaren Schritte i bezüglich gleicher, teilweise gleicher oder verschiedener Operationen innerhalb eines Gesamtprozesses entspricht. Mit dem vorgeschlagenen Rotationsverdampfer sind allgemein bis zu zu zehn gleiche, teilweise gleiche oder verschiedene Operationen innerhalb eines Gesamtprozesses durchführbar. Beispielsweise umfasst ein einschrittiger Gesamtprozess (n = 1) die destillative Gewinnung eines Oxy-Cope-Produktes aus der thermischen Umlagerung eines Allylethers in dem erhitzten Verdampfungskolben des Rotationsverdampfers, wobei mit einer Durchführung der Entlastungsschritte (III) bis (VII) Reste des Produktes aus dem Kühler und an der Eingangsverbindung des Zwischenventils zur Ausbeuteerhöhung erhältlich sind. Beispielsweise sind bei einer dreischrittigen (n = 3) destillativen Aufarbeitung einer flüssigen Feststoffaufschlämmung mit dem Rotationsverdampfer in einem ersten Schritt (i = 1) und in einem zweiten Schritt (i = 2) jeweils eine Fraktion eines von zwei Lösemitteln in dem betreffenden Sammelkolben und im letzten Schritt (i = 3) unter Halten eines hinreichend niedrigen Systemdruckes ps ein trockener Feststoff in dem Verdampfungskolben erhältlich, wobei nach dem ersten und dem zweiten Schritt jeweils mit einer Durchführung der Entlastungsschritte (III) bis (VII) Reste des jeweiligen Destillates aus dem Kühler und an der Eingangsverbindung des Zwischenventils entfernt sind. Somit sind die Entlastungsschritte (III) bis (VII) Teil eines Gesamtprozesses einer Destillation über einen Gesamtzeitabschnitt ΔT_{ges}. Allgemein sind in einem Gesamtprozess den Entlastungsschritten (III) bis (VII) kein oder ein Regelungsschritt oder mehrere Regelungsschritte vorgelagert und/oder kein oder ein Regelungsschritt oder mehrere Regelungsschritte nachgelagert; dies schließt die sequentielle Wiederholung der Entlastungsschritte (III) bis (VII) in ein und demselben Gesamtprozess mit ein.

Hierbei sind mit dem Steuermodul erste Systemdruck psii, der zweite Systemdruck p_{S2i}, der erste Grenzdruck p_{Gai}, der Haltedruck p_{Hi}, der zweite Grenzdruck p_{Gbi}, und der Zeitabschnitt Δt₅ᵢ einstellbar oder der erste Grenzdruck p_{Gai}, der Haltedruck p_{Hi} und der zweite Grenzdruck p_{Gbi} automatisch in Bezug auf den ersten Systemdruck psii festlegbar, wobei die Zeitabschnitte Δt₃ᵢ, Δt₄ᵢ, und Δt₆ᵢ jeweils als Umschaltzeiten auf dem Steuermodul durch Programmierung festgelegt sind. Der Zeitabschnitt Δt₇ᵢ ist mit dem Steuermodul einstellbar oder als Umschaltzeit festlegbar. Weiter ist der erste Systemdruck psii kleiner, gleich oder größer als der zweite Systemdruck p_{S2i}. Alternativ, für einen zweiten Systemdruck p_{S2i} gleich oder kleiner als der zweite Grenzdruck p_{Gbi}, sind auf dem Steuermodul die Zeitabschnitte Δt₆ᵢ und Δt₇ᵢ als einen einer Umschaltzeit entsprechenden zusammengefassten entlastenden Zeitabschnitt (nachfolgend als: (Δt₆ + Δt₇)ᵢ bezeichnet oder abgekürzt) in Form eines zusammengefassten endlastenden Endschrittes (nachfolgend als: [(VI) + (VII)] bezeichnet oder abgekürzt) festgelegt oder einstellbar. Die automatische Durchführung des zusammengefassten endlastenden Endschritt [(VI) + (VII)] umfasst die Senkung Haltedruckes p_{Hi} auf den zweiten Systemdruck p_{S2i} unter Schließung des Zwischenventils beim Durchlaufen des zweiten Grenzdruckes p_{Gbi}.

Auf dem Steuermodul ist für jeden Schritt i, welcher die Entlastungsschritte (III) bis (VI) oder (III) bis [(VI) + (VII)] aufweist, der erste Grenzdruck p_{Gai}, der Haltedruck p_{Hi} und der zweite Grenzdruck p_{Gbi} wie folgt einstellbar oder automatisch in Bezug auf den ersten Systemdruck psii festlegbar:
- der erste Grenzdruck p_{Gai} auf einen niedrigeren Druckwert als der erste Systemdruck psii einstellbar oder durch Eingabe eines ersten Erniedrigungsbetrages (nachfolgend als: δ_{Gai} bezeichnet oder abgekürzt) auf einen niedrigeren Druckwert als der erste Systemdruck psii automatisch festlegbar oder durch Eingabe eines ersten Anteilsfaktors (nachfolgend als: f_{Gai} bezeichnet oder abgekürzt) als ein Produkt des ersten Systemdruckes psii mit dem Faktor f_{Gai} automatisch festlegbar,
- der Haltedruck p_{Hi} auf einen höheren Druckwert als der erste Systemdruck p_{S1i} einstellbar oder durch Eingabe eines Erhöhungsbetrages (nachfolgend als: δ_{Hi} bezeichnet oder abgekürzt) auf einen höheren Druckwert als der erste Systemdruck psii automatisch festlegbar oder durch Eingabe eines Haltedruck-Faktors (nachfolgend als: f_{Hi} bezeichnet oder abgekürzt) als ein Produkt des ersten Systemdruckes psii mit dem Faktor f_{Hi} automatisch festlegbar und
- der zweite Grenzdruck p_{Gbi} auf einen niedrigeren Druckwert als der Haltedruck p_{Hi} einstellbar oder durch Eingabe eines zweiten Erniedrigungsbetrages (nachfolgend als: δ_{Gbi} bezeichnet oder abgekürzt) auf einen niedrigeren Druckwert als der Haltedruck p_{Hi} automatisch festlegbar oder durch Eingabe eines zweiten Anteilsfaktors (nachfolgend als: f_{Gbi} bezeichnet oder abgekürzt) als ein Produkt des ersten Systemdruckes psii mit dem Faktor f_{Gbi} automatisch festlegbar,
wobei der erste Grenzdruck p_{Gai} kleiner oder gleich als der zweite Grenzdruck p_{Gbi} ist, wobei der erste Grenzdruck p_{Gai} als auch der zweite Grenzdruck p_{Gbi} nicht kleiner als der mit dem Systemdruck-Erzeuger erzeugbare maximal niedrigste Druck ist und wobei der Haltedruck p_{Hi} nicht höher als der zu Beginn eines Gesamtprozesses gegebene Druck und somit nicht höher als der Atmosphärendruck ist.

Zur Durchführung der Entlastungsschritte (III) bis (VII) oder der Entlastungsschritte (III) bis [(VI) + (VII)] sind auf dem Steuermodul die Faktoren f_{Gai} und f_{Gbi} jeweils größer als 0 und kleiner als 1 und der Faktor f_{Hi} größer als 1 einstellbar. Zur Durchführung der Entlastungsschritte umfassen die Anteilsfaktoren f_{Gai} und f_{Gbi} typischerweise einen Bereich von weniger als 1 (entspricht weniger als 100 % des ersten Systemdruckes p_{S1i}) bis 0,8 (entspricht 80 % des ersten Systemdruckes p_{S1i}). Zur Durchführung der Entlastungsschritte umfasst der Haltedruck-Faktor f_{Hi} typischerweise einen Bereich von mehr als 1 (entspricht mehr als 100 %) bis 1,5 (entspricht 150 % des ersten Systemdruckes p_{S1i}).

Ist auf dem Steuermodul für einen oder mehrere oder alle Schritte i der entlastende Zeitabschnitt Δt₅ᵢ gleich Null gestellt und
- der betreffende erste Grenzdruck p_{Gai} gleich dem Haltedruck p_{Hi} und gleich dem zweiten Grenzdruck p_{Gbi} und gleich dem ersten Systemdruck p_{S1i} eingestellt, das heißt: p_{Gai} = p_{Hi} = p_{Gbi} = p_{S1i}, oder
- der erste Erniedrigungsbetrag δ_{Gai}, der Erhöhungsbetrag δ_{Hi} und der zweite Erniedrigungsbetrag δ_{Gbi} gleich Null gewählt, das heißt: δ_{Gai} = δ_{Hi} = δ_{Gbi} = 0, oder
- die Faktoren f_{Gai}, f_{Gbi} und f_{Hi} gleich 1 gewählt, das heißt: f_{Gai} = f_{Gbi} = f_{Hi} = 1,
so sind für den Schritt i oder die betreffenden Schritte i die Durchführung der Entlastungsschritte (III) bis (VI) oder (III) bis [(VI) + (VII)] abgestellt. Somit ist besonders vorteilhaft je nach Bedarf die Durchführung der Entlastungsschritte (III) bis (VII) oder (III) bis [(VI) + (VII)] für einen Schritt i oder für mehrere oder für alle Schritte i für einen Gesamtprozess auf dem Steuermodul wählbar. Dies ist insbesondere für Fraktionen mit relativ kleinen Volumenumfang und/oder Destillate sehr niedriger Viskosität indiziert.

Mit der Senkung des ersten Systemdruckes psii auf den ersten Grenzdruck p_{Gai} im Entlastungsschritt (III) ist im Sammelkolben ein kurzfristiger Unterdruck erzeugbar. In dem Entlastungsschritt (III) ist so durch den erzeugten Unterdruck ein kurzfristiges Ansaugen von einem im Kühler und vor allem vor und an der Eingangsverbindung des Zwischenventils verbliebenen Restbestandteil eines Destillates aus dem Kühler bewirkt. Mit dem Entlastungsschritt (III) ist im Zeitabschnitt Δt₃ᵢ für die nachfolgenden Entlastungsschritte (IV) und (V) somit ein Abfließen dieses verbliebenen Restbestandteils eines Destillates durch das geöffnete Zwischenventil in den betreffenden Sammelkolben initiierbar. Hierbei ist Verdampfungsverlust von im Kühler verbliebendem Restbestandteil eines Destillates aufgrund des als kurze Umschaltzeit gegebenen Zeitabschnittes Δt₃ᵢ vernachlässigbar.

Für den Entlastungsschritt (IV) ist ein Haltedruck p_{Hi} oberhalb des Siededruckes p_{Bi} des in dem Kühler und vor und an der Eingangsverbindung des Zwischenventils verbliebenen Restbestandteils eines Destillates mit dem Steuermodul einstellbar oder automatisch bezüglich des ersten Systemdruckes psii anpassbar. Ein Verdampfungsverlust dieses Restbestandteiles durch den Kühler in den Systemdruck-Erzeuger ist somit besonders vorteilhaft verhindert. Ein Verdampfungsverlust von im Kühler verbliebendem Restbestandteil eines Destillates unterhalb dessen Siededruckes p_{Bi} ist in dem als kurze Umschaltzeit gegebenen Zeitabschnitt Δt₄ᵢ ebenfalls vernachlässigbar.

Für den Entlastungsschritt (V) ist ein solcher hinreichend langer entlastender Zeitabschnitt Δt₅ᵢ mit dem Steuermodul einstellbar, in welchem ein möglichst vollständiges Abfließen von dem im Kühler verbliebenden Restbestandteil eines Destillates durch das geöffnete Zwischenventil in den betreffenden Sammelbehälter gewährleistet ist. Typischerweise umfasst der entlastende Zeitabschnitt Δt₅ᵢ 3 s bis 10 min.

Bei dem Entlastungsschritt (VI) ist aufgrund des als kurze Umschaltzeit gegebenen Zeitabschnittes Δt₆ᵢ und durch Verschließen des Zwischenventils bei Erreichen des zweiten Grenzdruckes p_{Gbi} die Entstehung von einem zu hohen Unterdruck und damit ein Sieden des Destillates im betreffenden Sammelkolben wiederum verhindert.

Der Entlastungsschritt (VII) umfasst die Regelung des zweiten Grenzdruckes p_{Gbi} auf einen zweiten Systemdruck p_{S2i} in einem abschließenden entlastenden Zeitabschnitt Δt₇ᵢ. Ist der Zeitabschnitt Δt₇ᵢ auf dem Steuermodul eingestellt, so umfasst dieser typischerweise 10⁻³ s bis 6 h.

Ist der zweite Systemdruck p_{S2i} gleich dem zweiten Grenzdruck p_{Gbi}, so ist das Steuermodul durch Programmierung zur Erkennung des Zeitabschnittes Δt₆ᵢ und des Zeitabschnittes Δt₇ᵢ als einen einzigen entlastenden zusammenfallenden Abschlusszeitabschnitt (nachfolgend als: (Δt₆ᵢ = Δt₇ᵢ) bezeichnet oder abgekürzt) ausgebildet, das heißt, in diesem Fall entspricht der Zeitabschnitt Δt₆ᵢ einer endlichen Umschaltzeit und der Zeitabschnitt Δt₇ᵢ einer formellen Umschaltzeit von 0 s.

Sind auf dem Steuermodul durch Programmierung die Entlastungsschritte (VI) und (VII) als ein zusammengefasster endlastender Endschritt [(VI) + (VII)] festgelegt oder gewählt, so ist das Verschließen des Zwischenventils bei Erreichen des zweiten Grenzdruckes p_{Gbi} und die Regelung des zweiten Grenzdruckes p_{Gbi} auf einen zweiten Systemdruck p_{S2i} in einem einzigen Schritt bewerkstelligt.

Somit ist mit dem vorgeschlagenen Rotationsverdampfer ein nahezu vollständiges Abfließen von dem im Kühler und vor allem vor und an der Eingangsverbindung des Zwischenventils verbliebenen Restbestandteil eines Destillates durch das geöffnete Zwischenventil in den Sammelkolben bei der Durchführung der Entlastungsschritte (III) bis (VII) oder (III) bis [(VI) + (VII)] innerhalb eines Gesamtprozesses bewerkstelligbar. Dadurch ist zum Erzielen einer möglichst kurzen Schaltzeit, welche für das Verschließen oder das Öffnen des Zwischenventils erforderlich ist, eine möglichst kleine Eingangsverbindung des Zwischenventils realisierbar. Weiter ist mit dem vorgeschlagenen Rotationsverdampfer ein zu hoher Unterdruck und damit ein Sieden des in dem betreffenden Sammelkolben befindlichen Destillates verhindert. Ein Rücksieden oder Rückschlagen des Destillates aus dem betreffenden Sammelkolben ist daher mit dem vorgeschlagenen Rotationsverdampfer vollständig vermeidbar.

Im einfachsten Fall weist somit Gesamtprozess mindestens die Entlastungsschritte (III) bis (VII) oder (III) bis [(VI) + (VII)] auf (n = 1; i =1), wobei der Gesamtprozess ausschließlich in die Zeitabschnitte Δt₃ᵢ, Δt₄ᵢ, Δt₅ᵢ, Δt₆ᵢ und Δt₇ᵢ oder in die Zeitabschnitte Δt₃ᵢ, Δt₄ᵢ, Δt₅ᵢ und (Δt₆ + Δt₇)ᵢ in der angegeben Reihenfolge gegliedert ist.

In einer Ausführungsform der vorliegenden Erfindung ist der erste Grenzdruck p_{Gai} des Schrittes i gleich dem zweiten Grenzdruck p_{Gbi} desselben Schrittes i ist und entspricht somit einem gleichgesetzten Grenzdruck (nachfolgend als: p_{Gi} bezeichnet oder abgekürzt) des Schrittes i, das heißt: p_{Gai} = p_{Gbi} = p_{Gi}. Hierbei ist auf dem Steuermodul der gleichgesetzte Grenzdruck p_{Gi} für jeden Schritt i, welcher die Entlastungsschritte (III) bis (VI) oder (III) bis [(VI) + (VII)] aufweist:
- auf einen niedrigeren Druckwert als der erste Systemdruck psii einstellbar oder
- in Bezug auf den ersten Systemdruck psii durch Eingabe eines gleichgesetzten Erniedrigungsbetrages (nachfolgend als: δ_{Gi} bezeichnet oder abgekürzt) auf einen niedrigeren Druckwert als der erste Systemdruck psii automatisch festlegbar oder
- in Bezug auf den ersten Systemdruck psii durch Eingabe eines gleichgewählten Anteilsfaktors (nachfolgend als: f_{Gi} bezeichnet oder abgekürzt) als ein Produkt des ersten Systemdruckes psii mit dem Faktor f_{Gi} automatisch festlegbar,
wobei zur Durchführung der Entlastungsschritte (III) bis (VII) oder (III) bis [(VI) + (VII)] auf dem Steuermodul der Faktor f_{Gi} größer als 0 und kleiner als 1 einstellbar ist. Typischerweise umfasst der gleichgesetzte Anteilsfaktor f_{Gi} zur Durchführung der Entlastungsschritte einen Bereich von weniger als 1 (entspricht weniger als 100 % des ersten Systemdruckes p_{S1i}) bis 0,8 (entspricht 80 % des ersten Systemdruckes p_{S1i}).

Ist auf dem Steuermodul für einen oder mehrere oder alle Schritte i der entlastende Zeitabschnitt Δt₅ᵢ gleich Null gestellt und
- der betreffende gleichgesetzte Grenzdruck p_{Gi} gleich dem Haltedruck p_{Hi} und und gleich dem ersten Systemdruck psii eingestellt, das heißt: p_{Gi} = p_{Hi} = p_{S1i}, oder
- der gleichgesetzte Erniedrigungsbetrag δ_{Gi} und der Erhöhungsbetrag δ_{Hi} gleich Null gewählt, das heißt: δ_{Gi} = δ_{Hi} = 0, oder
- die Faktoren f_{Gi} und f_{Hi} gleich 1 gewählt, das heißt: f_{Gi} = f_{Hi} = 1,
so sind für den Schritt i oder die betreffenden Schritte i die Durchführung der Entlastungsschritte (III) bis (VI) oder (III) bis [(VI) + (VII)] wiederum abgestellt.

Der gleichgesetzte Grenzdruck p_{Gi} ist daher bei Bedarf so gewählt oder automatisch festgelegt, dass im Entlastungsschritt (III) im Sammelkolben ein kurzfristiger Unterdruck erzeugbar ist, bei welchem ein Sieden des im betreffenden Sammelkolben befindlichen Destillates in den Entlastungsschritten (III), (IV) und (VI) nicht gegeben oder vernachlässigbar ist. Somit ist der gleichgesetzte Grenzdruck p_{Gi} größer als der Siededruck p_{Bi} des im betreffenden Sammelkolben befindlichen Destillates und kleiner als der Haltedruck p_{Hi}.

Durch die Gleichsetzung des ersten Grenzdruckes p_{Gai} mit dem zweiten Grenzdruck p_{Gbi} zu dem gleichgesetzten Grenzdruck p_{Gi} entfällt somit vorteilhaft ein mit dem Steuermodul festzulegender oder zu bestimmender Parameter für den Entlastungsschritt (III) oder den Entlastungsschritt (VI) oder [(VI) + (VII)].

In einer weiteren Ausführungsform ist das Steuermodul zur automatischen Durchführung der Entlastungsschritte (III) bis (VII) durch manuelle Auslösung eines Befehls, welcher nachfolgend als Entlastungsbefehl bezeichnet ist, zu einem beliebigen Zeitpunkt t₁ innerhalb eines Gesamtprozesses ausgebildet sowie programmiert. An dem Zeitpunkt t₁ ist ein erster Systemdruck psii gegeben.

Mit der Ausführung des Entlastungsbefehls ist der Gesamtprozess unterbrochen. Nach der Ausführung des Entlastungsbefehls ist der Gesamtprozess fortgesetzt. Somit ist der ursprüngliche Zeitabschnitt Δt_{ges} des Gesamtprozesses um die Zeitabschnitte Δt₃ᵢ, Δt₄ᵢ, Δt₅ᵢ, Δt₆ᵢ und Δt₇ᵢ erweitert. Hierzu ist es erforderlich, dass auf dem Steuermodul der erste Systemdruck psii dem zweiten Systemdruck p_{S2i} gleichgesetzt ist.

Für die Durchführung des Entlastungsbefehls ist wahlweise auf dem Steuermodul ein Zeitabschnitt Δt₅ᵢ voreinstellbar. Alternativ ist durch eine Schaltungsdauer einer betätigten Schaltungseinrichtung, beispielsweise durch Halten einer geschalteten Taste, ein Zeitabschnitt Δt₅ᵢ nach Durchlaufen der Zeitabschnitte Δt₁ᵢ bis Δt₄ᵢ während einer Durchführung des Entlastungsbefehles wählbar. Nach beendeter Schaltungsdauer, beispielsweise durch Loslassen der geschalteten Taste, ist das Steuermodul zur anschließenden automatischen Durchführung der Entlastungsschritte (VI) und (VII) ausgebildet, wobei die Zeitabschnitte Δt₃ᵢ, Δt₄ᵢ, Δt₆ᵢ und Δt₇ᵢ auf dem Steuermodul in Form von automatisch durchführbaren Umschaltschritten programmiert und somit als Umschaltzeiten festgelegt sind. Damit der Entlastungsbefehl über den gesamten Bereich des mit dem Systemdruck-Erzeuger erzeugbaren Systemdruckes durchführbar ist, ist auf dem Steuermodul:
- der Haltedruck p_{Hi} durch Eingabe eines Haltedruck-Faktors f_{Hi},
- der erste Grenzdruck p_{Gai} durch Eingabe eines ersten Anteilsfaktors f_{Gai} und der zweite Grenzdruck p_{Gbi} durch Eingabe eines zweiten Anteilsfaktors f_{Gbi} oder der gleichgesetzte Grenzdruck p_{Gi} durch Eingabe eines gleichgewählten Anteilssaktors f_{Gi}
jeweils als ein Produkt des ersten Systemdruckes psii mit den betreffenden Faktoren f_{Hi}, f_{Gai}, f_{Gbi} und fei für einen Gesamtprozess festlegbar.

Mit Durchführung eines solchen Entlastungsbefehls ist zu jedem Zeitpunkt eines Gesamtprozesses eine Entfernung von im Kühler kondensiertem Destillat bewerkstelligbar. Der Entlastungsprozess ist in einem Gesamtprozess einmal oder mehrmals durchführbar.

In noch einer weiteren Ausführungsform ist das Steuermodul des vorgeschlagenen Rotationsverdampfers zur einmaligen und zur mehrmaligen automatischen Durchführung nachfolgender Prozessschritte (I) und (II) sowie der Entlastungsschritte (III), (IV), (V), (VI) und (VII) in der angegebenen Reihenfolge innerhalb eines Schrittes i von jeweils n aufeinanderfolgenden Schritten innerhalb eines Gesamtzeitabschnittes Δt_{ges} eines Gesamtprozesses ausgebildet:
(I) Bei geschlossenem Zwischenventil Senkung eines Anfangsdruckes p_{A} oder eines zweiten Grenzdruckes p_{Gb(i-1)} oder eines gleichgesetzten Grenzdruckes p_{G(i-1)} des dem jeweiligen Schritt i vorgelagerten Schrittes (i-1) auf einen Prozessdruck p_{Pi} innerhalb eines ersten Zeitabschnittes Δt₁ᵢ,
(II) bei geöffnetem Zwischenventil Halten des Prozessdruckes p_{Pi} für einen zweiten Zeitabschnitt Δt₂ᵢ,
(III) bei geöffnetem Zwischenventil Senkung des Prozessdruckes p_{Pi} auf einen ersten Grenzdruck p_{Gai} oder auf einen gleichgesetzten Grenzdruck p_{Gi} innerhalb eines dritten, das heißt: des vorrausgehenden entlastenden Zeitabschnittes Δt₃ᵢ,
(IV) bei geöffnetem Zwischenventil Erhöhung des ersten Grenzdruckes p_{Gai} oder des gleichgesetzten Grenzdruckes p_{Gi} auf einen Haltedruck p_{Hi} in einem vierten, das heißt: dem nachfolgenden entlastenden Zeitabschnitt Δt₄ᵢ,
(V) bei geöffnetem Zwischenventil Halten des Haltedruckes p_{Hi} in einem fünften, das heißt: dem nächsten entlastenden Zeitabschnitt Δt₅ᵢ,
(VI) bei geöffnetem Zwischenventil Senkung des Haltedruckes p_{Hi} auf einen zweiten Grenzdruck p_{Gbi} bezeichnet oder wieder auf den gleichgesetzten Grenzdruck p_{Gi} in einem sechsten, das heißt: dem weiteren entlastenden Zeitabschnitt Δt₆ᵢ und bei Erreichen des zweiten Grenzdruckes p_{Gbi} oder des gleichgesetzten Grenzdruckes p_{Gi} Schließen des Zwischenventils,
(VII) Prozessschritt (I) ausgehend von dem zweiten Grenzdruck p_{Gbi} oder dem gleichgesetzten Grenzdruck p_{Gi} gefolgt von dem Prozessschritt (II) und der Entlastungsschritte (III) bis (VII) in der vorbenannten Reihenfolge für jeweils den dem Schritt i nachgelagerten Schritt (i+1) und nach Durchlaufen des letzten Schrittes (i = n) Absenkung des letzten zweiten Grenzdruckes p_{Gbn} oder des letzten gleichgesetzten Grenzdruckes p_{Gn} auf einen Enddruck p_{E} in einem Endzeitabschnitt Δt_{E}, das heißt: dem abschließenden entlastenden Zeitabschnitt Δt₇ᵢ.

Folglich ist in jedem Schritt i:
- ein Prozessdruck p_{Pi},
- ein zu dem Prozessdruck p_{Pi} zugeordneter erster Grenzdruck p_{Gai} oder gleichgesetzter Grenzdruck p_{Gi},
- ein zu dem ersten Grenzdruck p_{Gai} oder zu dem gleichgesetzten Grenzdruck p_{Gi} zugeordneter Haltedruck p_{Hi},
- ein zu dem Haltedruck p_{Hi} zugeordneter zweiter Schrittgrenzdruck p_{Gbi} oder wieder gleichgesetzter Grenzdruck p_{Gi} durchlaufen und
nach dem letzten Schritt (i = n) der Enddruck p_{E} erreicht. Hierbei ist auf dem Steuermodul:
- der Anfangsdruck p_{A} einstellbar oder durch den Atmosphärendruck gegeben,
- der Enddruck p_{E} einstellbar,
- der Endzeitabschnitt Δt_{E} einstellbar oder als Umschaltzeit festlegbar,
- jeder erste Zeitabschnitt Δt₁ᵢ einstellbar oder als Umschaltzeit festlegbar oder festgelegt,
- jeder Prozessdruck p_{Pi} und jeder zweite Zeitabschnitt Δt₂ᵢ einstellbar.

Somit ist:
- jeder Prozessdruck p_{Pi} eines Schrittes i kleiner als der Prozessdruck p_{P(i-1)} des dem Schritt i jeweils vorgelagerten Schrittes (i-1),
- jeder erste Grenzdruck p_{Gai} oder gleichgesetzte Grenzdruck p_{Gi} eines Schrittes i kleiner als der erste Grenzdruck p_{Ga(i-1)} oder gleichgesetzte Grenzdruck p_{G(i-1)} des Schrittes (i-1),
- jeder zweite Grenzdruck p_{Gbi} oder gleichgesetzte Schrittgrenzdruck p_{Gi} eines Schrittes i größer als der Prozessdruck p_{P(i+1)} des dem Schritt i jeweils nachgelagerten Schrittes (i+1).

Hierbei entspricht n einer natürlichen Zahl von 1 bis zur Anzahl der trennbaren oder der zu trennenden Fraktionen einer Flüssigkeitsmischung. Der Gesamtzeitabschnitt Δt_{ges} umfasst die Gesamtzeitdauer für die Durchführung von insgesamt n aufeinanderfolgenden Schritten des Gesamtprozesses. Der Gesamtzeitabschnitt Δt_{ges} entspricht somit der Summe aller Zeitabschnitte Δt₁ᵢ, Δt₂ᵢ, Δt₃ᵢ, Δt₄ᵢ, Δt₅ᵢ, Δt₆ᵢ und Δt_{E} aller Schritte i jeweils von i = 1 bis i = n. Die Zeitabschnitte Δt₁ᵢ, Δt₂ᵢ, Δt₃ᵢ, Δt₄ᵢ, Δt₅ᵢ, Δt₆ᵢ und Δt_{E} aller Schritte i sind jeweils innerhalb eines Schrittes i und bezüglich aller Schritte i untereinander unabhängig voneinander.

In einer weiteren bevorzugten Ausführungsform sind für alle n Schritte i auf dem Steuermodul:
- die Haltedrücke p_{Hi} durch Eingabe eines gemeinsamen Haltedruck-Faktors (nachfolgend als: f_{H} bezeichnet oder abgekürzt),
- die ersten Grenzdrücke p_{Gai} durch Eingabe eines gemeinsamen ersten Anteilsfaktors (nachfolgend als: f_{Ga} bezeichnet oder abgekürzt) und die zweiten Grenzdrücke p_{Gbi} durch Eingabe eines gemeinsamen zweiten Anteilsfaktors (nachfolgend als: f_{Gb} bezeichnet oder abgekürzt) oder die gleichgesetzten Grenzdrücke p_{Gi} durch Eingabe eines gemeinsamen gleichgewählten Anteilsfaktors (nachfolgend als: f_{G} bezeichnet oder abgekürzt)
jeweils als ein Produkt der einzelnen Prozessdrücke p_{Pi} mit den betreffenden Faktoren f_{G}, f_{Ga}, f_{Gb} und f_{H} festlegbar. Zur Durchführung der Entlastungsschritte (III) bis (VII) sind auf dem Steuermodul die allen Schritten i gemeinsamen Faktoren f_{Ga}, f_{Gb} und f_{G} jeweils größer als 0 und kleiner als 1 einstellbar, wobei der allen Schritten i gemeinsame Haltedruck-Faktor f_{H} größer als 1 einstellbar ist. Zur Durchführung der Entlastungsschritte umfassen die gemeinsamen Anteilsfaktoren f_{Ga}, f_{Gb} und f_{G} typischerweise einen Bereich von weniger als 1 bis 0,8. Typischerweise umfasst der gemeinsame Haltedruck-Faktor f_{H} zur Durchführung der Entlastungsschritte einen Bereich von mehr als 1 bis 1,5.

Somit ist durch Eingabe eines einzigen erforderlichen Satzes an Faktoren f_{G}, f_{Ga}, f_{Gb} und f_{H} der Aufwand für die Gesamteingabe eines Gesamtprozesses minimiert. Weiter ist hierdurch sichergestellt, dass die ersten Grenzdrücke p_{Gai}, zweiten Grenzdrücke p_{Gbi} oder die gleichgesetzten Grenzdrücke p_{Gi} sowie die Haltedrücke p_{Hi} jeweils ein gleiches und damit angemessenes Größenverhältnis zueinander bezüglich eines jeden Prozessdruckes p_{Pi} aufweisen.

Sind auf dem Steuermodul die Faktoren f_{H}, f_{Ga}, f_{Gb} und f_{G} gleich 1 gewählt, das heißt: f_{H} = f_{Ga} = f_{Gb} = 1 oder f_{H} = f_{G} = 1, so sind für alle Schritte i die Durchführung der Entlastungsschritte (III) bis (VI) abgestellt.

Mit dem erfindungsgemäßen Rotationsverdampfer sind sowohl einschrittige (n = 1; i = {1}) als auch mehrschrittige (n > 1; i = {1, ... n}) Gesamtprozesse durchführbar. Für jeden Prozessschritt (I) und (II) eines Schrittes i ist individuell der betreffende erste Schrittzeitabschnitt Δt₁ᵢ, der zweite Schrittzeitabschnitt Δt₂ᵢ und der zu Δt₂ᵢ gehörige Schrittprozessdruck p_{Pi} so wählbar, dass bei diesem ein gewünschtes Resultat möglichst vollständig erzielbar ist. Die Prozessschritte (I) und (II) sind somit mit dem Steuermodul auf bekannte oder vorbestimmte oder vorgegebene Prozessbedingungen für einen Gesamtprozess individuell einstellbar. Typischerweise umfassen in den Prozessschritten (I) und (II) die gleichen oder verschiedenen Schrittzeitabschnitte Δt₁ᵢ und Δt₂ᵢ 30 s bis 6 h, sofern nicht ein oder mehrere erste Schrittzeitabschnitte Δt₁ᵢ als Umschaltzeit auf dem Steuermodul eingestellt sind.

Der Endzeitabschnitt Δt_{E} des letzten Entlastungsschrittes (VII) ist auf dem Steuermodul bezüglich seiner Dauer einstellbar oder als Umschaltzeit festlegbar. Ist ein Endzeitabschnitt Δt_{E} auf dem Steuermodul eingestellt, so umfasst dieser typischerweise 1 s bis 6 h.

Ist in einem Schritt i der zweite Grenzdruck p_{Gbi} oder der gleichgesetzte Grenzdruck p_{Gi} gleich dem Prozessdruck p_{P(i+1)} des dem Schritt i nachgelagerten Schrittes (i+1), so ist das Steuermodul zur Erkennung des diesem Schritt i zugeordneten Zeitabschnittes Δt₆ᵢ und des Zeitabschnittes Δt₁₍ᵢ₊₁₎ als einen einzigen entlastenden zusammenfallenden Abschlusszeitabschnitt (nachfolgend als: (Δt₆ᵢ = Δt₁₍ᵢ₊₁₎) bezeichnet oder abgekürzt) ausgebildet. In diesem Fall entspricht der betreffende Zeitabschnitt Δt₆ᵢ einer Umschaltzeit und der dazugehörige Zeitabschnitt Δt₁₍ᵢ₊₁₎ einer formellen Umschaltzeit von 0 s.

Ein einschrittiger Gesamtprozess (n = 1), welcher mit dem erfindungsgemäßen Rotationsverdampfer durchführbar ist, ist beispielsweise bei der Trocknung eines heterogenen Gemisches aus Silicagel mit einem organischen Lösemittel gegeben. Ein weiteres nicht einschränkendes Beispiel für einen einschrittigen Gesamtprozess ist das Eindampfen einer flüssigen Lösung mit dem vorgeschlagenen Rotationsverdampfer zwecks Gewinnung eines in der Lösung gelösten Feststoffes.

Ein mehrschrittiger Gesamtprozess (n > 1), welcher mit dem erfindungsgemäßen Rotationsverdampfer durchführbar ist, ist insbesondere bei der fraktionierten Destillation eines Flüssigkeitsgemisches gegeben. Hierbei sind mehrere Fraktionen an Destillat ausgehend von einem Anfangsdruck p_{A} bis zum Erreichen eines auf dem Steuermodul eingestellten Enddruckes pε erhältlich. Vorzugsweise ist hierbei in jedem Schritt i für die Durchführung der Prozessschritte (I) und (II) der Prozessdruck p_{Pi} auf den Siededruck einer Fraktion p_{Bi} eingestellt und der zweite Zeitabschnitt Δt₂ᵢ so hinreichend lang gewählt, dass die gewünschte Fraktion möglichst vollständig abtrennbar ist. Bei jeweils hinreichenden Differenzen der einzelnen Siededrücke p_{Bi} sind die Zeitabschnitte Δt₆ᵢ und Δt₁₍ᵢ₊₁₎ als Umschaltzeiten wählbar.

Mit der automatischen Durchführung des Entlastungsschritte (I) bis (VI), welche mit dem dem erfindungsgemäßen Rotationsverdampfer bewerkstelligbar sind, ist besonders vorteilhaft nach deren Durchführung in jedem Schritt i ein Abfließen von dem im Kühler und vor allem vor und an der Eingangsverbindung verbliebenen Restbestandteil eines Destillates durch das geöffnete Zwischenventil in den betreffenden Sammelkolben bewerkstelligbar. Zusätzlich ist für jede Fraktion, welche in einem Schritt i erhältlich ist, ein zu hoher Unterdruck und ein Rücksieden oder Rückschlagen des Destillates aus dem betreffenden Sammelkolben und somit eine teilweise Durchmischung der einzelnen Fraktionen vollständig vermeidbar.

In noch einer weiteren bevorzugten Ausführungsform ist das Steuermodul des erfindungsgemäßen Rotationsverdampfers zur wahlweisen automatischen Durchführung der Entlastungsschritte (VI) und (VII) als ein zusammengefasster endlastender Endschritt [(VI) + (VII)] für mindestens einen Schritt i oder für alle n Schritte i ausgebildet.

Hierbei ist der sechste Zeitabschnitt Δt₆₍ᵢ₋₁₎ eines dem jeweiligen Schritt i vorgelagerten Schrittes (i-1) und der erste Zeitabschnitt Δt₁ᵢ des jeweiligen Schrittes i in einem einer Umschaltzeit entsprechenden zusammengefassten entlastenden Zeitabschnitt (nachfolgend als: (Δt₆₍ᵢ₋₁₎ + Δt₁ᵢ) bezeichnet oder abgekürzt) einstellbar. Alternativ oder zusätzlich ist für den letzten Schritt (i = n) der letzte sechste Schrittzeitabschnitt Δt₆ₙ und und der Endschrittzeitabschnitt Δt_{E} in einem einer Umschaltzeit entsprechenden zusammengefassten Zeitabschnitt (nachfolgend als: (Δt₆ₙ + Δt_{E}) bezeichnet oder abgekürzt) einstellbar. Dies ist für alle n Schritte i ausführbar, sofern jeder zweite Grenzdruck p_{Gbi} oder gleichgesetzte Grenzdruck p_{Gi} gleich oder größer als der Prozessdruck p_{P(i+1)} des dem Schritt i jeweils nachgelagerten Schrittes (i+1) ist. Eine Zusammenfassung der Entlastungsschritte (VI) und (VII) als einen einzigen Endschritt [(VI) + (VII)] ist dann sinnvoll, wenn die Siededrücke p_{Bi} der betreffenden Fraktionen sich stark unterscheiden.

Die Verläufe bezüglich aktuellem Systemdruck ps in Abhängigkeit von der Zeit t der mit dem erfindungsgemäßen Rotationsverdampfer bewerkstelligbaren Prozessschritte (I) und (II) und Entlastungsschritte (III) bis (VII) inklusive des Entlastungsbefehls sind insgesamt stetig. Hierbei ist der jeweilige Verlauf innerhalb eines Zeitabschnittes Δt₁ᵢ, Δt₂ᵢ, Δt₃ᵢ, Δt₄ᵢ, Δt₅ᵢ, Δt₅ᵢ, Δt₇ᵢ oder Δt_{E}, (Δt₆ + Δt₇)ᵢ, (Δt₆₍ᵢ₋₁₎ + Δt₁ᵢ), (Δt₆ₙ + Δt_{E}) und (Δt₆ᵢ = Δt₁₍ᵢ₊₁₎) idealisiert linear oder nahezu linear oder konkav oder konvex und/oder asymptotisch bezüglich eines nachfolgenden Zeitabschnittes. Innerhalb eines Zeitabschnittes Δt₁ᵢ, Δt₂ᵢ, Δt₃ᵢ, Δt₄ᵢ, Δt₅ᵢ, Δt₅ᵢ, Δt₇ᵢ oder Δt_{E}, (Δt₆ + Δt₇)ᵢ, (Δt₆₍ᵢ₋₁₎ + Δt₁ᵢ), (Δt₆ₙ + Δt_{E}) und (Δt₆ᵢ = Δt₁₍ᵢ₊₁₎) weist der Systemdruck ps in Abhängigkeit von der Zeit t einen glatten Verlauf auf. Aufgrund von technisch bedingten Schwankungen in der Regelung ist auch ein überlagerter stufenweiser und/oder überlagerter periodischer Verlauf innerhalb eines Zeitabschnittes mit dem erfindungsgemäßen Rotationsverdampfer erzeugbar.

Die auf dem Steuermodul festgelegten oder gewählten Umschaltzeiten der jeweils voneinander unabhängigen gleichen oder teilweise gleichen oder verschiedenen Zeitabschnitte Δt₁ᵢ, Δt₂ᵢ, Δt₃ᵢ, Δt₄ᵢ, Δt₅ᵢ, Δt₆ᵢ, Δt₇ᵢ oder Δt_{E}, (Δt₆ + Δt₇)ᵢ, (Δt₆₍ᵢ₋₁₎ + Δt₁ᵢ), (Δt₆ₙ + Δt_{E}) und (Δt₆ᵢ = Δt₁₍ᵢ₊₁₎) betragen geräte- und/oder prozessbedingt typischerweise 10⁻³ s bis 5 min.

Regelgröße bei der Durchführung des Entlastungsbefehls, der Prozessschritte (I) und (II) sowie der Entlastungsschritte (III) bis (VII) mit dem vorgeschlagenen Rotationsverdampfer ist der Systemdruck ps. Die Führungsgrößen umfassen die ersten Grenzdrücke p_{Gai}, die zweiten Grenzdrücke p_{Gbi}, die gleichgesetzten Grenzdrücke p_{Gi}, die Haltedrücke p_{Hi} sowie die Prozessdrücke p_{Pi}. Diese Führungsgrößen sind temperaturabhängig.

In noch einer weiteren Ausführungsform ist daher das Steuermodul des erfindungsgemäßen Rotationsverdampfers zur Einstellung einer Temperatur (nachfolgend als: T_{V} bezeichnet oder abgekürzt) des Temperiermediums im Temperierbad auf einen konstanten Wert oder auf einen linear oder graduell von einer Anfangstemperatur (nachfolgend als: T_{A} bezeichnet oder abgekürzt) auf eine Endtemperatur (nachfolgend als: T_{E} bezeichnet oder abgekürzt) steigenden Verlauf ausgebildet. Hierbei entspricht die Temperatur T_{V} annähernd der des Verdampfungskolbens und damit der darin befindlichen Flüssigkeit oder Flüssigkeitsmischung.

Bei einer fraktionierten Destillation sind die Siededrücke p_{Bi} der einzelnen Fraktionen auf die Prozessdrücke p_{Pi} mit dem Steuermodul einstellbar, wobei die Siededrücke p_{Bi} temperaturabhängig sind. Vorzugsweise ist daher für die Dauer eines jeden Zeitabschnittes Δt₂ᵢ zu einem Prozessdruck p_{Pi} eine konstante Temperatur T_{V} mit dem Steuermodul einstellbar. Dies ist durch die Einstellung einer konstanten Temperatur T_{V}, das heißt: T_{V} = T_{A} = T_{E}, über den Gesamtzeitabschnitt Δt_{ges} realisierbar, welche für alle Siededrücke p_{Bi} in dem betreffenden Bereich des einzustellenden Systemdruckes ps optimiert ist. Alternativ ist dies durch wahlweise Einstellung einer Temperaturrampe über den Gesamtzeitabschnitt Δt_{ges} bewerkstelligbar, wobei für jeden Prozessdruck p_{Pi} eine über den jeweiligen Zeitabschnitt Δt₂ᵢ konstante Siedetemperatur (nachfolgend als: T_{Bi} bezeichnet oder abgekürzt) eingestellt ist und hierbei jeder Zeitabschnitt Δt₇ᵢ so hinreichend lang gewählt ist, dass eine Erhöhung der Siedetemperatur T_{Bi} auf die höhere Siedetemperatur (nachfolgend als: T_{B(i+1)} bezeichnet oder abgekürzt) des nachfolgenden Schrittes (i+1) gewährleistet ist. Im Falle von hinreichend ähnlichen Siedetemperaturen T_{Bi} ist alternativ auch über den Gesamtzeitabschnitt Δt_{ges} eine lineare Erhöhung der Temperatur T_{V} des Temperierbades von einer Anfangstemperatur T_{A} auf eine Endtemperatur T_{E} einstellbar.

Beispielsweise ist bei der Durchführung des Crackprozesses von Dicyclopentadien zu Cyclopentadien die Temperatur T_{V} konstant auf die Zersetzungstemperatur von Dicyclopentadien bei 170° C und der Prozessdruck p_{P1} auf 950 mbar eingestellt, so dass eine Kondensation von Cyclopentadien in dem Kühler bewerkstelligbar ist. Eine Akkumulation von Cyclopentadien in dem Kühler und an der Eingangsverbindung des Zwischenventils ist bei der Durchführung dieses Prozesses mit dem erfindungsgemäßen Rotationsverdampfer durch ein- oder mehrmalige Auslösung des Entlastungsbefehles vermeidbar.

Somit ist durch Anpassung der Temperatur T_{V} des Temperierbades ein Gesamtprozess bezüglich einer hohen Trennleistung oder Erhalt einer Fraktion mit einer gewünschten Zusammensetzung optimierbar.

Nachfolgend wird auf eine besonders bevorzugte Ausführungsform des erfindungsgemäßen Rotationsverdampfers hinsichtlich des Zwischenventils eingegangen. Das Zwischenventil ist zum Ablassen eines Destillates in jeden Sammelkolben geschaltet. Das Zwischenventil ist direkt über eine lösbare Verbindung mit dem Kühler verbunden. Dies gestattet eine einfache Wartung und Reinigung des Zwischenventils.

Vorzugsweise ist das Zwischenventil als elektronisch steuerbares Magnetventil ausgebildet. Hierbei ist das Zwischenventil direkt über eine Flanschverbindung oder Schraubverbindung mit dem Kühler und direkt oder indirekt jeweils über eine lösbare Verbindung, vorzugsweise jeweils über eine Kugelschliff-Verbindung, mit jedem Sammelkolben verbunden. Eine Flanschverbindung und eine Schraubverbindung weisen eine hohe Dichtigkeit auf, ohne dass hierfür eine Fettung erforderlich ist. Eine Kugelschliff-Verbindung gestattet eine besonders schnelle Abnahme oder schnellen Wechsel des betreffenden Sammelkolbens, auch während der Durchführung eines Gesamtprozesses.

Handelsübliche Mehrwegventile, welche als Zwischenventile für den vorgeschlagenen Rotationsverdampfer verwendbar sind, weisen aus bautechnischen oder Platzgründen gewöhnlich nicht mehr als drei Ausgänge als Ausgangsverbindungen zu den Sammelkolben auf.

Eine indirekte Verbindung des Zwischenventils mit vorzugsweise mehreren Sammelkolben ist über eine Spinnvorlage oder durch einen Autosampler realisierbar. Hierbei ist eine Ausgangsverbindung des Zwischenventils mit der Verteilerspinne oder dem Autosampler verbunden, wobei die Verteilerspinne oder der Autosampler wiederum mit mindestens einem Sammelkolben lösbar verbunden ist. In typischen Ausführungsformen sind über die Verteilerspinne oder den Autosampler bis zu zehn Sammelbehälter mit dem Zwischenventil verbunden. Mit der Spinnvorlage oder dem Autosampler sind Fraktionen eines Destillates in mehrere Sammelkolben verteilbar.

In noch einer weiter bevorzugten Ausführungsform des erfindungsgemäßen Rotationsverdampfers ist jeder Sammelkolben über mindestens ein Endbelüftungsventil belüftbar. Hierbei ist jedes Endbelüftungsventil als elektronisch steuerbares Magnetventil ausgebildet und autonom mit dem Steuermodul regelbar. Besonders vorteilhaft gestattet das Endbelüftungsventil einen Ausgleich des Unterdruckes in dem betreffenden Sammelkolben, wodurch dieser schon während des Gesamtprozesses abnehmbar und gegen einen neuen Sammelkolben auswechselbar ist. Somit ist mit dem Endbelüftungsventil eine zusätzliche Absicherung bezüglich eines Rücksieden oder Rückschlagen des Destillates aus dem Sammelkolben realisierbar.

Das elektronische Steuermodul des erfindungsgemäßen Rotationsverdampfers ist zur Einstellung und zur automatischen Steuerung der nachfolgenden Regelungsschritte in der angegebenen Reihenfolge wie zuvor beschrieben ausgebildet:
- optional: Prozessschritt (I) mit dem darauffolgenden Prozessschritt (II),
- Entlastungsschritt (III),
- Entlastungsschritt (IV),
- Entlastungsschritt (V),
- Entlastungsschritt (VI),
- Entlastungsschritt (VIII).

Dies schließt die zuvor beschriebene Ausbildung des elektronischen Steuermoduls zur Einstellung und zur automatischen Durchführung des manuell auslösbaren Entlastungsbefehles mit ein.

Bevorzugt weist das Steuermodul ein Display auf, welches zur Einstellung, zur Anzeige sowie optional zur graphischen Darstellung der zuvor beschriebenen Regelungsschritte als auch optional zur graphischen Darstellung des Verlaufes des Systemdruckes ps in Abhängigkeit von der Zeit t bezüglich einmal oder mehrmals durchgeführter zuvor beschriebener Regelungsschritte ausgebildet ist. Dies schließt die Einstellung des manuell auslösbaren Entlastungsbefehles, dessen Anzeige sowie die optionale graphische Darstellung des Verlaufes des Systemdruckes ps in Abhängigkeit von der Zeit t bezüglich des einmal oder mehrmals durchgeführten Entlastungsbefehles mit ein.

Hierzu weist das Display zur Einstellung der Regelungsschritte einen Touchscreen auf. Die Anzeige der Regelungsschritte umfasst die Anzeige der auf dem Touchscreen eingegebenen Parameter für jeden Regelungsschritt und für den manuell auslösbaren Entlastungsbefehl. Die graphische Darstellung der eingegeben Regelungsschritte ist in Form eines Diagramms auf dem Display darstellbar oder abrufbar, wobei das Diagramm den Verlauf des Systemdruckes ps in Abhängigkeit von der Zeit t darstellt und optional das Diagramm Beschriftungen mit den eingestellten Parametern aufweist.

Weiter ist das Display optional zur graphischen Darstellung des Verlaufes des gemessenen Systemdruckes ps in Abhängigkeit von der Zeit t in Form eines Diagrammes bezüglich durchgeführter Regelungsschritte ausgebildet. Dieses Diagramm ist in Echtzeit auf dem Display darstellbar, auf dem Steuermodul speicherbar und nachträglich auf auf dem Display abrufbar. Optional sind zusätzlich in dem Diagramm die eingestellten Paramater der Regelungsschritte darstellbar.

Die Aufgabe der vorliegenden Erfindung wird weiter durch ein Verfahren zur fraktionierten Destillation einer Flüssigkeit oder einer Flüssigkeitsmischung mit dem erfindungsgemäßen Rotationsverdampfer gelöst. Dieses Verfahren ist mit dem erfindungsgemäßen Rotationsverdampfer automatisch durchführbar und umfasst nachfolgende zuvor beschriebene Verfahrensschritte auf, welche in der angegebenen Reihenfolge ausführbar sind:
- Prozessschritt (I),
- Prozessschritt (II),
- Entlastungsschritt (III),
- Entlastungsschritt (IV),
- Entlastungsschritt (V),
- Entlastungsschritt (VI),
- Nachregelungsschritt (VII).

Mit dem erfindungsgemäßen Rotationsverdampfer sind Gesamtprozesse, insbesondere fraktionierte Destillationen, besonders vorteilhaft automatisiert durchführbar.

Mit dem erfindungsgemäßen Rotationsverdampfer ist mittels des Steuermoduls eine Akkumulation von Destillat in dem Kühler und an dem Zwischenventil behebbar oder völlig vermeidbar. Ein Rücksieden oder Rückschlagen des Destillates aus jedem Sammelkolben in den Kühler ist mit dem vorgeschlagenen Rotationsverdampfer vermeidbar.

Dies gestattet besonders vorteilhaft eine konstruktiv gering ausgelegte Baugröße des Kühlers und insbesondere des Zwischenventils. Hierbei sind durch minimalisierte Baugrößen von Ventilkolben und Ventilsitz des Zwischenventils besonders vorteilhaft schnelle Umschaltzeiten bezüglich eines Öffnens oder Schleißens und damit ein schnelles Ansprechen der automatisierten Regelung realisierbar.

Mit dem erfindungsgemäßen Rotationsverdampfer ist durch Verhinderung der Akkumulation von Destillat im Kühler bei einer fraktionierten Destillation eine Vermischung einzelner Fraktionen ausgeschlossen. Somit ist mit dem erfindungsgemäßen Rotationsverdampfer bei einer fraktionierten Destillation eine optimale Reinheit der einzelnen Fraktionen erzielbar.

Während eines Gesamtprozesses ist jeder Sammelkolben von dem erfindungsgemäßen Rotationsverdampfer abnehmbar und austauschbar.

Somit zeichnet sich der erfindungsgemäßen Rotationsverdampfer im Betrieb durch eine hohe Wirtschaftlichkeit aus.

Mit dem Steuermodul des erfindungsgemäßen Rotationsverdampfers sind besonders vorteilhaft bestehende Rotationsverdampfer kostengünstig nachrüstbar, sofern der Systemdruck-Erzeuger und das Zwischenventil elektronisch steuerbar sind. Das Steuermodul ist auch für jede andere Destillationsvorrichtung verwendbar, deren Steuerung hauptsächlich auf einem Systemdruck ps als Regelgröße beruht.

### Beschreibung der Ausführungsformen

Nachfolgend wird ein die Erfindung nicht einschränkendes Ausführungsbeispiel des erfindungsgemäßen Rotationsverdampfers anhand von Figuren näher erläutert. Es zeigen:
- **Fig. 1**: Eine schematische Darstellung des erfindungsgemäßen Rotationsverdampfers mit einem Zwischenventil mit einer Ausgangsverbindung über eine Verteilerspinne zu drei Sammelkolben;
- **Fig. 2**: denselben Rotationsverdampfer mit einem Zwischenventil mit zwei Ausgangsverbindungen zu jeweils einem Sammelkolben;
- **Fig. 3**: Ausschnitte aus einem schematischen Systemdruck-Zeit-Diagramm, welche die Ausführung der Entlastungsschritte (III) bis (VII) mit dem Rotationsverdampfer unter Regelung bezüglich eines ersten Grenzdruckes p_{Gai} und eines zweiten Grenzdruckes p_{Gbi} zeigen;
- **Fig. 4**: Ausschnitte aus einem schematischen Systemdruck-Zeit-Diagramm, welche die Ausführung der Entlastungsschritte (III) bis (VII) mit dem Rotationsverdampfer unter Regelung bezüglich eines gleichgesetzten Grenzdruckes p_{Gi} zeigen;
- **Fig. 5**: Ausschnitte aus einem schematischen Systemdruck-Zeit-Diagramm, welche die Ausführung der Entlastungsschritte (III) bis (VII) mit dem Rotationsverdampfer unter Regelung bezüglich eines gleichgesetzten Grenzdruckes p_{Gi} und bezüglich zusammengefasster Schritte (VI) und (VII) und damit eines zusammengefassten Zeitabschnittes (Δt₆ + Δt₇)ᵢ zeigen;
- **Fig. 6**: Ausschnitte aus einem schematischen Systemdruck-Zeit-Diagramm, welche die Ausführung des Entlastungsbefehles mit dem Rotationsverdampfer während eines Gesamtprozesses zeigen;
- **Fig. 7**: Ausschnitte aus einem schematischen Systemdruck-Zeit-Diagramm für die Trocknung eines heterogenen Gemisches aus Silicagel und Chloroform mit dem Rotationsverdampfer;
- **Fig. 8**: Ausschnitte aus einem schematischen Systemdruck-Zeit-Diagramm einer Destillation einer Mischung aus Ethanol und Toluol bei konstant 40° C, welche mit dem vorgeschlagenen Rotationsverdampfer ausgeführt ist.

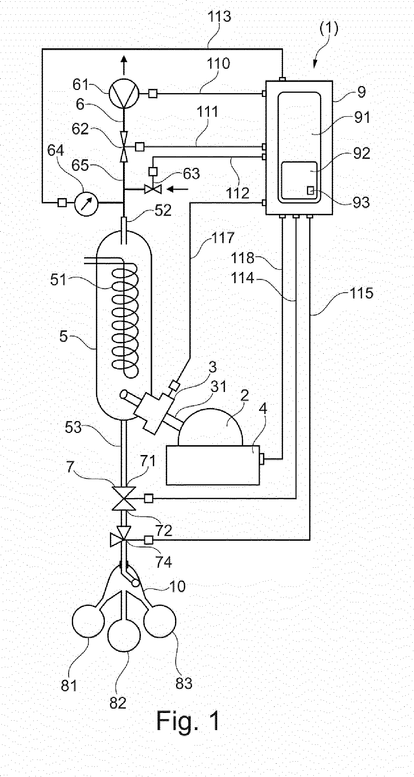

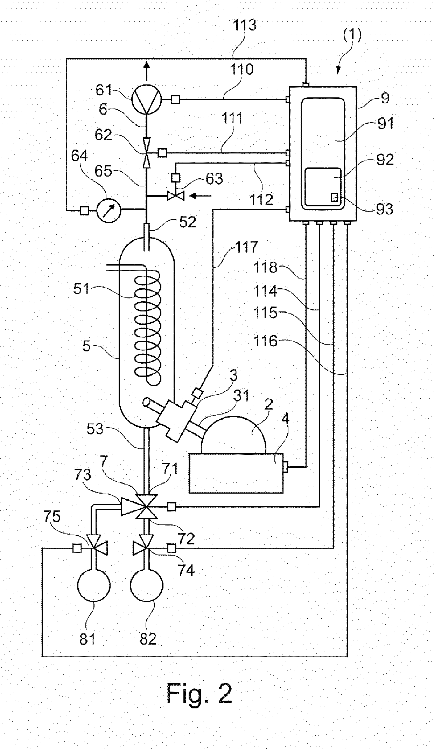

Die **Fig. 1** und die **Fig. 2** zeigen schematisch den Rotationsverdampfer **1.** Der Rotationsverdampfer **1** weist einen Verdampfungskolben **2,** einen Elektromotor **3,** ein Temperierbad **4,** einen Kühler **5,** einen elektrischen Systemdruck-Erzeuger **6,** ein Zwischenventil **7,** mehrere Sammelkolben (**81**, **82**, **83**) und ein elektronisches Steuermodul **9** auf. Die **Fig. 1** zeigt den Rotationsverdampfer **1,** welcher ein Zwischenventil **7** mit einer Eingangsverbindung **71** und einer Ausgangsverbindung **72** zu einer Verteilerspinne **10** aufweist, wobei die Verteilerspinne **10** mit drei Sammelkolben (**81**, **82**, **83**) verbunden ist. Die **Fig. 2** zeigt denselben Rotationsverdampfer **1,** welche ein Zwischenventil mit zwei Ausgangsverbindungen (**72**, **73**) zu jeweils einem Sammelkolben (**81**, **82**) aufweist.

Der Verdampfungskolben **2** ist als Glaskolben mit einem Volumen von 2 L ausgebildet und über eine lösbare Schliffverbindung an ein Dampfrohr **31** angeschlossen. Das Dampfrohr **31** ist über eine Wellendichtung in den Kühler **5** geführt. Die Wellendichtung und damit das Dampfrohr **31** und somit folglich der Verdampfungskolben **2** ist mittels des Elektromotors **3** in Rotation versetzbar. Das Dampfrohr **31** ist aus Glas gefertigt. Die Schliffverbindung des Dampfrohrs **31** und die Wellendichtung sind in der **Fig. 1** und in der **Fig. 2** nicht eingezeichnet.

Das elektrische Temperierbad **4** ist zum Temperieren des Verdampfungskolbens **2** während des Betriebes des Rotationsverdampfers **1** vorgesehen. Hierzu liegt der Verdampfungskolben **2** in dem Temperierbad **4** ein, wobei das Temperierbad **4** mit Wasser als Temperiermedium gefüllt ist und das Wasser mit einer Elektroheizung beheizbar ist. Die Elektroheizung und das Wasser als Temperiermedium sind in der **Fig. 1** und in der **Fig. 2** nicht eingezeichnet.

Der Kühler **5** weist als Baugruppe eine innenliegende Kühlspirale **51** als Kühlvorrichtung, die Wellendichtung, eine Schraubverbindung **52** zu dem Systemdruck-Erzeuger **6** und eine Schraubverbindung **53** zu dem Zwischenventil **7** auf. Das Innenvolumen des Kühlers beträgt 10 L. Der Kühler **5** ist bis auf die Wellendichtung aus Glas gefertigt. Die Wellendichtung des Kühlers **5** ist in der **Fig. 1** und in der **Fig. 2** nicht eingezeichnet.

Durch die Kühlspirale **51** ist eine temperierte Kühlflüssigkeit, beispielsweise mittels eines über Schläuche mit der Kühlspirale **51** verbundenen Umwälzkühlers, umwälzbar. Die Kühlflüssigkeit ist bei Betrieb des Rotationsverdampfers **1** auf eine niedrigere Temperatur als der Verdampfungskolben **2** temperiert. Ein Umwälzkühler, verbindende Schläuche und eine Kühlflüssigkeit sind in der **Fig. 1** und in der **Fig. 2** nicht eingezeichnet.

Der Systemdruck-Erzeuger **6** weist als Baugruppe eine elektrische Vakuum-Membranpumpe **61,** ein elektrisch steuerbares Regelungsventil **62,** ein elektrisch steuerbares Belüftungsventil **63** und ein elektronisch auslesbares Manometer **64** auf. Mit dem Manometer **64,** welches als Pirani-Sonde ausgebildet ist, ist der Systemdruck ps messbar. Die Vakuum-Membranpumpe **61** ist mit dem Regelungsventil **62** verbunden. Über eine gemeinsame Rohrverbindung **65** ist das Regelungsventil **62,** das Belüftungsventil **63** und das Manometer **64** mit dem Kühler **5** verbunden. Das Regelungsventil **62** und das Belüftungsventil **63** sind jeweils als elektrisches Magnetventil ausgebildet. Mit dem Regelungsventil **62** und dem Belüftungsventil **63** ist der Systemdruck ps in dem Kühler **5,** dem Verdampfungskolben **2** und, wahlweise über das Zwischenventil **7,** in den Sammelkolben (**81**, **82**, **83**) einstellbar. Das Regelungsventil **62,** das Belüftungsventil **63** und das Zwischenventil **7** sind jeweils unabhängig voneinander regelbar. Die Richtung des an dem Systemdruck-Erzeugers **6** eingezeichneten Pfeils zeigt die Flussrichtung des aus dem Verdampfungskolben **2** durch den Kühler **5** geförderten Gases während des Betriebes des Rotationsverdampfers **1** an.

Das Zwischenventil **7** weist als Baugruppe eine Eingangsverbindung **71,** in der **Fig. 1** eine Ausgangsverbindung **72** mit einem Endbelüftungsventil **74** und in der **Fig. 2** zwei Ausgangsverbindungen (**72**, **73**) mit jeweils einem Endbelüftungsventil (**74**, **75**) auf. Das Zwischenventil **7** ist als elektronisch schaltbares Magnetventil ausgebildet. Alle Endbelüftungsventile (**74**, **75**) sind ebenfalls als elektronisch schaltbare Magnetventile ausgebildet. Die Endbelüftungsventile (**74**, **75**) sind jeweils unabhängig voneinander und unabhängig von dem Zwischenventil **7,** dem Belüftungsventil **63** und dem Regelungsventil **62** elektronisch steuerbar. Das Zwischenventil **7** ist über die Eingangsverbindung **71,** welche als Schraubverbindung ausgestaltet ist, mit dem Kühler **5** verbunden.

Alle Sammelkolben (**81**, **82**, **83**) sind jeweils über eine Kugelschliff-Verbindung entweder indirekt über die Verteilerspinne **10** mit der Ausgangsverbindung **72,** wie in **Fig. 1** dargestellt, oder direkt mit den Ausgangsverbindungen (**72**, **73**), wie in **Fig. 2** dargestellt, des Zwischenventils **7** verbunden. Über das jeweils zugeordnete Endbelüftungsventil (**74**, **75**) ist jeder Sammelkolben (**81**, **82**, **83**) belüftbar. Jeder Sammelbehälter ist als Glaskolben mit einem Innenvolumen vom 500 mL ausgebildet und zum Auffangen von Destillat vorgesehen.

In der **Fig. 1** und in der **Fig. 2** sind ein Flüssigkeitsgemisch in dem Verdampfungskolben **2** und Destillate in den Sammelkolben (**81**, **82**, **83**) nicht eingezeichnet.

Das Steuermodul **9** weist als Baugruppe ein Display **91** auf, wobei auf dem Display ein Touchscreen **92** und auf dem Touchscreen **92** eine Taste **93** integriert ist. Das Steuermodul **9** ist über elektrische Steuerleitungen (**110**, **111**, **112**, **113**, **114**, **115**, **116, 117, 118**) mit der Vakuum-Membranpumpe **61,** dem Regelungsventil **62,** dem Belüftungsventil **63**, dem Manometer **64,** dem Zwischenventil **7** und dessen Endbelüftungsventile (**74**, **75**), dem Elektromotor **3** sowie mit dem Temperierbad **4** verbunden. Elektrische Leitungen zur Stromversorgung aller elektrisch betreibbaren Bauteile und Baugruppen des Rotationsverdampfers sind in der **Fig. 1** und **Fig. 2** nicht eingezeichnet.

Das Steuermodul **9** ist somit zur elektronischen Steuerung des Systemdruck-Erzeugers **6**, des Zwischenventils **7** und dessen Endbelüftungsventile (**74**, **75**), des Temperierbades **4** und der Rotationsgeschwindigkeit des Verdampfungskolbens **2** ausgebildet.

Das Steuermodul **9** des Rotationsverdampfers **1** ist zur einmaligen oder mehrmaligen automatischen Durchführung der Entlastungschritte (III) bis (VII) durch manuelle Auslösung mittels einer Taste **93** als Entlastungsbefehl zu einem beliebigen Zeitpunkt t₁ bei einem Systemdruck psii eines Gesamtprozesses ausgebildet. Die Taste **93** befindet sich auf dem Touchscreen **92.** Hierfür ist der Touchscreen **92** des Steuermoduls zur manuellen Eingabe nachfolgender Parameter ausgebildet:
- erster Anteilsfaktor f_{Gai} für einen ersten Grenzdruck p_{Gai} und zweiter Anteilsfaktor f_{Gbi} für einen zweiten Grenzdruck p_{Gbi} oder alternativ gleichgewählter Anteilsfaktor f_{Gi} für einen gleichgesetzten Grenzdruck p_{Gi},
- Haltedruck-Faktor f_{Hi} für einen Haltedruck p_{Hi}.

Somit ist der erste Grenzdruck p_{Gai} durch Eingabe des ersten Anteilsfaktors f_{Gai} und der zweite Grenzdruck p_{Gbi} durch Eingabe des zweiten Anteilsfaktors f_{Gbi} oder alternativ der gleichgesetzte Grenzdruck p_{Gi} durch Eingabe des gleichgewählten Anteilsfaktors f_{Gi} sowie der Haltedruck p_{Hi} durch Eingabe des Haltedruck-Faktor f_{Hi} jeweils als ein Produkt des gewählten ersten Systemdruckes psii mit den betreffenden Faktoren f_{Gai}, f_{Gbi}, f_{Gi} und f_{Hi} festlegbar.

Durch Halten der geschalteten Taste **93** ist ein Zeitabschnitt Δt₅ᵢ für den Entlastungsschritt (V) nach Durchlaufen der Entlastungsschritte (III) und (IV) während einer Durchführung des Entlastungsbefehles individuell wählbar. Nach Loslassen der geschalteten Taste **93** ist das Steuermodul **9** zur anschließenden automatischen Durchführung der Entlastungsschritte (VI) und (VII) und somit zur Fortsetzung des Gesamtprozesses ausgebildet, wobei zur Durchführung des Entlastungsbefehles die Zeitabschnitte Δt₃ᵢ für den Entlastungsschritt (III), Δt₄ᵢ für den Entlastungsschritt (IV), Δt₆ᵢ für den Entlastungsschritt (VI) und Δt₇ᵢ für den Entlastungsschritt (VII) auf dem Steuermodul **9** als Umschaltzeiten festgelegt sind.

Weiter ist das Steuermodul **9** des Rotationsverdampfers **1** ist zur Einstellung und einmaligen und mehrmaligen automatischen Durchführung nachfolgender Regelungsschritte eines Gesamtprozesses:
- Prozessschritt (I),
- Prozessschritt (II),
- Entlastungsschritt (III),
- Entlastungsschritt (IV),
- Entlastungsschritt (V),
- Entlastungsschritt (VI) und
- Entlastungsschritt (VII)
in der angegebenen Reihenfolge programmiert und ausgebildet. Die Einstellung dieser Regelungsschritte umfasst die manuelle Eingabe nachfolgender Parameter für alle n Schritte i auf dem Touchscreen **92**:
- Anfangsdruck p_{A},
- Enddruck p_{E} des letzten Schrittes (i = n),
- Endzeitabschnitt Δt_{E} als Wert oder Umschaltzeit,
- erste Zeitabschnitte Δt₁ᵢ als Wert oder Umschaltzeit,
- Prozessdrücke p_{Pi} mit den jeweils zugeordneten zweiten Zeitabschnitten Δt₂ᵢ,
- gemeinsamer Haltedruck-Faktor f_{H},
- gemeinsamer erster Anteilsfaktor f_{Ga} und gemeinsamer zweiter Anteilsfaktor f_{Gb} für alle Schritte i oder alternativ
   gemeinsamer gleichgewählter Anteilsfaktor f_{G} für alle Schritte i,
- für jeden Schritt i individuell einstellbare fünfte Schrittzeitabschnitte Δt₅ᵢ.

Somit sind die Haltedrücke p_{Hi} durch Eingabe eines gemeinsamen Haltedruck-Faktors f_{H}, die ersten Grenzdrücke p_{Gai} durch Eingabe des gemeinsamen ersten Anteilsfaktors f_{Ga} und die zweiten Grenzdrücke p_{Gbi} durch Eingabe des gemeinsamen zweiten Anteilsfaktors f_{Gb} oder alternativ die gleichgesetzten Grenzdrücke p_{Gi} durch Eingabe des gemeinsamen gleichgewählten Anteilsfaktors f_{G} jeweils als ein Produkt der einzelnen Prozessdrücke p_{Pi} mit den betreffenden Faktoren f_{H}, f_{Ga}, f_{Gb} und f_{G} festlegbar.

Zusätzlich ist das Steuermodul **9** des Rotationsverdampfers **1** zur wahlweisen Einstellung und automatischen Durchführung der Entlastungsschritte (VI) und (VII) als ein zusammengefasster endlastender Endschritt [(VI) + (VII)] für mindestens einen Schritt i oder für alle n Schritte i ausgebildet. Die Einstellung dieser Endschritte [(VI) + (VII)] umfasst zusätzlich für die betreffenden Schritte i die manuelle Festlegung nachfolgender Parameter als Umschaltzeiten auf dem Touchscreen **92:**
- zusammengefasste entlastende Schrittzeitabschnitte (Δt₆₍ᵢ₋₁₎ + Δt₁ᵢ),
- zusammengefasster Endschrittzeitabschnitt (Δt₆ₙ + Δt_{E}).

Auf dem Touchscreen **92** und damit auf dem Steuermodul **9** ist ebenfalls die Temperatur T_{V} des Temperierbades **4** jeweils manuell auf einen konstanten Wert oder auf einen linear oder graduell von einer Anfangstemperatur T_{A} auf eine Endtemperatur T_{E} steigenden Verlauf festlegbar.

Die graphische Darstellung der eingegeben Regelungsschritte ist in Form eines Diagramms auf dem Display **91** darstellbar oder abrufbar, wobei das Diagramm den Verlauf des Systemdruckes ps und der Temperatur T_{V} des Temperierbades **4** in Abhängigkeit von der Zeit t darstellt und das Diagramm Beschriftungen mit den eingestellten Parametern und deren Werten aufweist. Das Diagramm ist bezüglich der Werte der Temperatur T_{V}, des Systemdruckes ps und der Zeit skaliert. Dieses Diagramm ist in Echtzeit auf dem Display darstellbar, auf dem Steuermodul **9** speicherbar und nachträglich auf auf dem Display **91** abrufbar. Zusätzlich sind in dem Diagramm die eingestellten Paramater und deren Werte darstellbar. Dieses Diagramm ist bezüglich der Werte der Temperatur T_{V}, des Systemdruckes ps und der Zeit ebenfalls skaliert.

Auf dem Touchscreen **92** ist zusätzlich die Rotationsgeschwindigkeit des Verdampfungskolben **2** regelbar. Die eingestellte und aktuelle Rotationsgeschwindigkeit ist auf dem Display **92** abrufbar und darstellbar. In dem Diagramm bezüglich durchgeführter Regelungsschritte und des Temperaturverlaufes ist die Rotationsgeschwindigkeit in Abhängigkeit von der Zeit t mit dem Touchscreen **92** auf das Display **91** abrufbar und darstellbar.

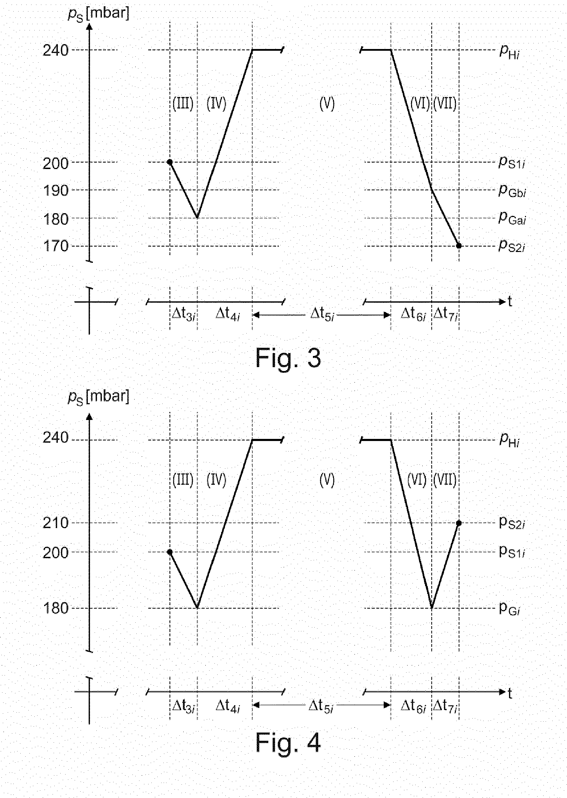

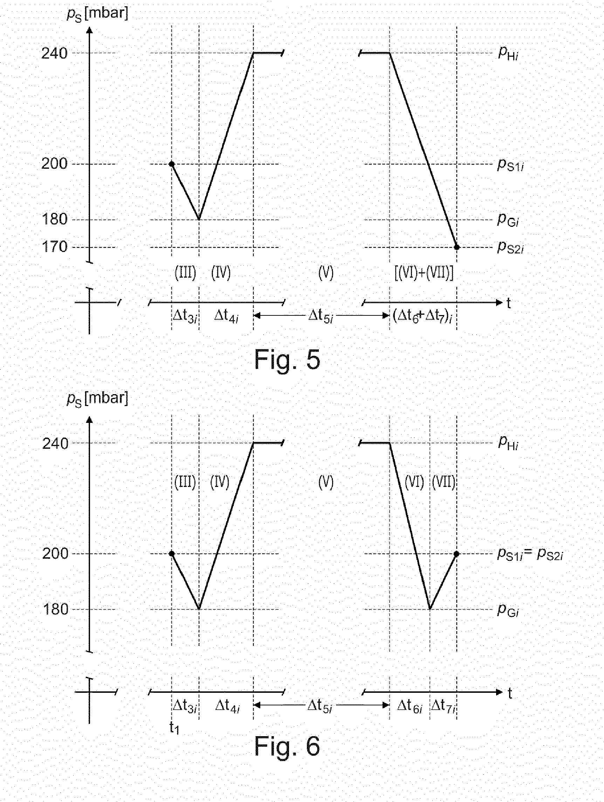

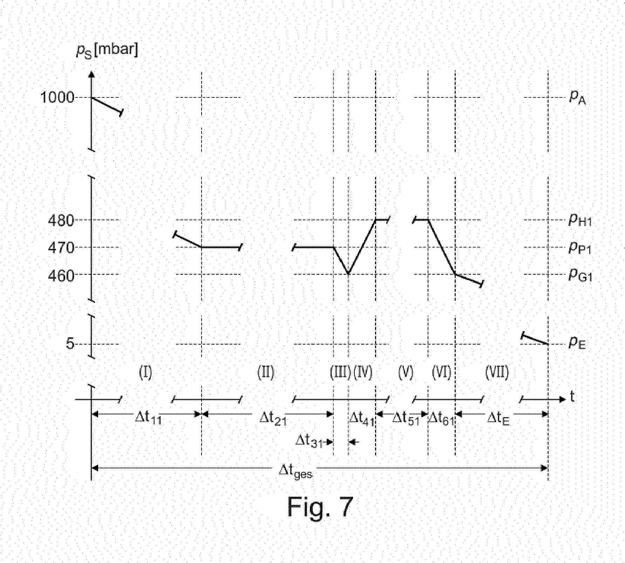

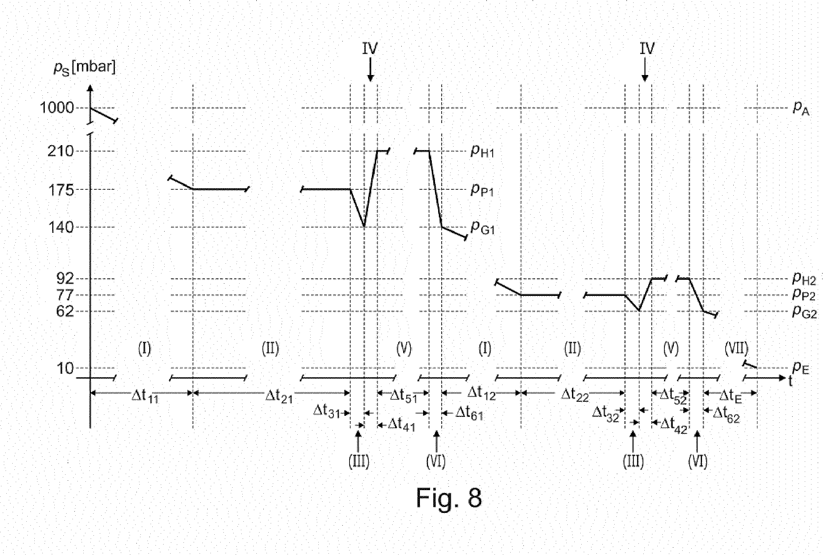

In den nachfolgenden Abschnitten wird auf die jeweiligen relevanten Ausschnitte aus den schematischen Systemdruck-Zeit-Diagrammen der **Fig. 3****,** der **Fig. 4****,** der **Fig. 5****,** der **Fig. 6****,** der **Fig. 7** und der **Fig. 8** näher eingegangen. Zur besseren Veranschaulichung sind relevanten Ausschnitte durch Achsenunterbrechung vergrößert dargestellt. In die **Fig. 3****,** in die **Fig. 4****,** in die **Fig. 5****,** in die **Fig. 6****,** in die **Fig. 7** und in die **Fig.** 8 sind die betreffenden Entlastungsschritte (III), (IV), (V), (VI), (VI) und [(VI) + (VII)], die jeweils dazugehörigen Zeitabschnitte Δt₁ᵢ, Δt₂ᵢ, Δt₃ᵢ, Δt₄ᵢ, Δt₅ᵢ, Δt₅ᵢ, Δt₇ᵢ, Δt_{E} sowie (Δt₆ + Δt₇)ᵢ eingezeichnet. Hierbei entsprechen die Zeitabschnitte Δt₁ᵢ, Δt₂ᵢ, Δt₃ᵢ, Δt₄ᵢ, Δt₅ᵢ, Δt₅ᵢ, Δt₇ᵢ, Δt_{E} sowie (Δt₆ + Δt₇)ᵢ Umschaltzeiten in einem Größenbereich von 10⁻³ s bis 1 s. Wo betreffend, sind in die **Fig. 3****,** in die **Fig. 4****,** in die **Fig. 5****,** in die **Fig. 6****,** in die **Fig. 7** und in die **Fig. 8** der Anfangsdruck p_{A}, Enddruck pε sowie die Führungsgrößen p_{S1i}, p_{S2i}, p_{Gai}, p_{Gbi}, p_{Gi}, p_{Hi} und p_{Pi} eingezeichnet.

In der **Fig. 3****,** in der **Fig. 4****,** in der **Fig. 5** und in der **Fig. 6** beträgt der erste Systemdruck psii 200 mbar und der Haltedruck p_{Hi} 240 mbar für einen auf dem Touchscreen eingestellten gemeinsamen Haltedruck-Faktor f_{H} von 1,2 für die **Fig. 3, Fig. 4** und **Fig 5** und für einen auf dem Touchscreen eingestellten Haltedruck-Faktor f_{Hi} von 1,2 für die **Fig. 6****.** In der **Fig. 3** beträgt der erste Grenzdruck p_{Gai} 180 mbar für einen auf dem Touchscreen **92** eingestellten ersten gemeinsamen Anteilsfaktor f_{Ga} von 0,9. In der **Fig. 4****,** in der **Fig. 5** und in der **Fig. 6** beträgt der gleichgesetzte Grenzdruck p_{Gi} ebenfalls 180 mbar für einen auf dem Touchscreen eingestellten gemeinsamen gleichgewählten Anteilsfaktor f_{G} von 0,9 für die **Fig. 3, Fig. 4** und **Fig 5** und für einen auf dem Touchscreen eingestellten gleichgewählten Anteilsfaktor f_{Gi} von ebenfalls 0,9. Somit sind die **Fig. 3****,** die **Fig. 4****,** die **Fig. 5** und die **Fig. 6** miteinander vergleichbar und jeweils als ein Ausschnitt aus einem Gesamtprozess zu verstehen, an welchem die Entlastungsschritte (III), (IV), (V), (VI) und [(VI) + (VII)] verdeutlicht werden. Hierbei ist jeweils der Haltedruck p_{Hi} höher als der erste Systemdruck psii, höher als der erste Grenzdruck p_{Gai} in der **Fig. 3** und der zweite Grenzdruck p_{Gbi} in der **Fig. 3** oder als der gleichgesetzte Grenzdruck p_{Gi} in der **Fig. 4****,** in der **Fig. 5** und in der **Fig. 6** und höher als der zweite Systemdruck p_{S2i}. In der **Fig. 3****,** in der **Fig. 4****,** in der **Fig. 5** und in der **Fig. 6** sind die Entlastungsschritte (III) bis (V) bei automatisch geöffnetem Zwischenventil **7** durchgeführt, bei welchen ein vollständiges Abfließen des an der Eingangsverbindung des Zwischenventils **7** und im Kühler **5** verblieben Destillates in den Sammelkolben **82** bewerkstelligt ist. Hierzu ist in der **Fig. 3****,** in der **Fig. 4** und in der **Fig. 5** der auf dem Touchscreen **92** eingestellte Zeitabschnitt Δt₅ᵢ von 1 min hinreichend lang gewählt.

Die **Fig. 3** zeigt Ausschnitte aus einem schematischen Systemdruck-Zeit-Diagramm, welche die automatische Ausführung der Entlastungsschritte (III) bis (VII) mit dem Rotationsverdampfer **1** unter Regelung bezüglich eines ersten Grenzdruckes p_{Gai} und eines zweiten Grenzdruckes p_{Gbi} von 190 mbar umfassen. Auf dem Touchscreen **92** ist somit für den zweiten Grenzdruck p_{Gbi} ein zweiter Anteilsfaktor f_{Gbi} von 0,95 eingegeben. Hierbei ist der erste Systemdruck psii größer als der zweite Systemdruck p_{S2i} von 170 mbar und der erste Grenzdruck p_{Gai} kleiner als der zweite Grenzdruck p_{Gbi}. Im Entlastungsschritt (VI) ist bei Erreichen des zweiten Grenzdruckes p_{Gbi} das Zwischenventil **7** automatisch geschlossen. Im gesamten Entlastungsschritt (VII) unter Erreichung des zweiten Systemdruckes p_{S2i} ist das Zwischenventil **7** geschlossen.

Die **Fig. 4** zeigt Ausschnitte aus einem schematischen Systemdruck-Zeit-Diagramm, welche die automatische Ausführung der Entlastungsschritte (III) bis (VII) mit dem Rotationsverdampfer **1** unter Regelung bezüglich eines gleichgesetzten Grenzdruckes p_{Gi} zeigen. Hierbei ist der erste Systemdruck psii kleiner als der zweite Systemdruck p_{S2i} von 210 mbar. Im Entlastungsschritt (VI) ist bei Erreichen des gleichgesetzten Grenzdruckes p_{Gi} das Zwischenventil **7** automatisch geschlossen. Im gesamten Entlastungsschritt (VII) unter Erreichung des zweiten Systemdruckes p_{S2i} ist das Zwischenventil **7** geschlossen.

Die **Fig. 5** zeigt Ausschnitte aus einem schematischen Systemdruck-Zeit-Diagramm, welche die automatische Ausführung der Entlastungsschritte (III) bis (VII) mit dem Rotationsverdampfer **1** unter Regelung bezüglich eines gleichgesetzten Grenzdruckes p_{Gi} und bezüglich zusammengefasster Schritte (VI) und (VII) und damit eines zusammengefassten Zeitabschnittes (Δts + Δt₇)i zeigen. Auf dem Touchscreen **92** wurden hierzu die Zeitabschnitte Δt₆ᵢ und Δt₇ᵢ als einen einer Umschaltzeit entsprechenden zusammengefassten entlastenden Zeitabschnitt (Δt₆ + Δt₇)ᵢ in Form eines zusammengefassten endlastenden Endschrittes [(VI) + (VII)] eingestellt. In dem zusammengefassten Zeitabschnitt (Δt₆ + Δt₇)ᵢ liegen der Haltedruck p_{Hi}, der gleichgesetzte Grenzdruck p_{Gi} und der zweite Systemdruck p_{S2i} von 170 mbar auf einer Linie in dem Systemdruck-Zeit-Diagramm. Dies zeigt, dass eine Zusammenfassung der Entlastungsschritte (VI) und (VII) ausführbar ist, sofern der zweite Systemdruck p_{S2i} gleich oder kleiner als der gleichgesetzte Grenzdruck p_{Gi} wie in der **Fig. 5** ist. Im entlastenden Endschritt [(VI) + (VII)] ist bis zum Erreichen des gleichgesetzten Grenzdruckes p_{Gi} das Zwischenventil **7** automatisch geöffnet, bei Erreichen des gleichgesetzten Grenzdruckes p_{Gi} ist das Zwischenventil **7** automatisch geschlossen.

Die **Fig. 6** zeigt Ausschnitte aus einem schematischen Systemdruck-Zeit-Diagramm, welche die automatische Ausführung des Entlastungsbefehles mit dem Rotationsverdampfer **1** während eines Gesamtprozesses zeigen. Der Entlastungsbefehl ist manuell mit der Taste **93** auslösbar oder ausgelöst. Hierbei ist der erste Systemdruck psii gleich dem zweiten Systemdruck p_{S2i} von 200 mbar und somit der zweite Systemdruck p_{S2i} größer als der gleichgesetzte Grenzdruck p_{Gi}. Durch manuelle Betätigung der Taste **93** sind die Entlastungsschritte (III) und (IV) ausgelöst. Durch Halten der geschalteten Taste **93** ist in der **Fig. 6** ein hinreichend langer Zeitabschnitt Δt₅ᵢ von 1 min für den Entlastungsschritt (V) gewählt, bis ein vollständiges Abfließen des an der Eingangsverbindung des Zwischenventils **7** und im Kühler **5** verblieben Destillates in den Sammelkolben **82** bewerkstelligt ist. Nach Loslassen der geschalteten Taste **93** ist eine anschließende automatische Durchführung der Entlastungsschritte (VI) und (VII) durch das Steuermodul **9** ausgelöst. Im Entlastungsschritt (VI) ist bei Erreichen des gleichgesetzten Grenzdruckes p_{Gi} das Zwischenventil **7** geschlossen. Im gesamten Entlastungsschritt (VII) unter Erreichung des zweiten Systemdruckes p_{S2i} ist das Zwischenventil **7** automatisch geschlossen. Nach der Durchführung des Entlastungsschrittes (VII) ist eine automatische Fortsetzung des Gesamtprozesses durch den Rotationsverdampfer **1** gegeben.

Die **Fig. 7** zeigt Ausschnitte aus einem schematischen Systemdruck-Zeit-Diagramm für die Trocknung eines heterogenen Gemisches aus Silicagel und Chloroform mit dem Rotationsverdampfer **1** bei einer Temperatur Tv von konstant 40° über den Gesamtzeitabschnitt Δt_{ges} dieses Gesamtprozesses. Zur Veranschaulichung ist der Gesamtzeitabschnitt Δt_{ges} in die **Fig. 7** eingezeichnet. Hierbei handelt es sich um einen einschrittigen Prozess (n = 1), wobei der einzige Schritt (i = 1) die Regelungsschritte (I) bis (VII) umfasst.

Um ein Durchschießen des Gemisches durch den Rotationsverdampfer **1** zu verhindern, ist der erste Zeitabschnitt Δt₁₁ in der **Fig. 7** als kontinuierliche Druckerniedrigung oder als Druckrampe ausgehend von einem Anfangsdruck p_{A} von 1000 mbar auf den Prozessdruck p_{P1} mit 45 min so hinreichend lang gewählt, dass ein vollständiges Ausgasen des Gemisches gewährleistet ist. Hierbei ist in dem Prozessschritt (I) das Zwischenventil **7** geschlossen, um im Falle eines Durchschießens des Gemisches dessen einfachere Wiedergewinnung aus dem Rotationsverdampfer **1** zu gewährleisten, das Zwischenventil **7** selbst von Verschmutzung zu verschonen und um den Rotationsverdampfer **1** einfacher reinigen zu können.

In der **Fig. 7** ist im Prozessschritt (II) der Prozessdruck p_{P1} auf den Siededruck von Chloroform bei 470 mbar bei 40° C eingestellt, wobei der zweite Zeitabschnitt Δt₂₁ von 90 min auf dem Touchscreen **92** so hinreichend lang gewählt ist, dass ein möglichst vollständiges Abdampfen von Chloroform gegeben ist. Hierbei ist das Zwischenventil **7** geöffnet, um das Chloroform in einem Sammelkolben **82** aufzufangen.

In der **Fig. 7** sind für die Entlastungsschritte (III) bis (VI) auf dem Touchscreen **92** ein gemeinsamer Haltedruck-Faktor f_{H} von 1,021 für einen Haltedruck p_{H1} von 480 mbar und ein gemeinsamer gleichgewählter Anteilsfaktor f_{G} von 0,979 für einen gleichgesetzten Grenzdruck p_{G1} von 460 mbar eingestellt. Die Entlastungsschritte (III) bis (V) sind bei geöffnetem Zwischenventil **7** durchgeführt, bei welchen ein vollständiges Abfließen des an der Eingangsverbindung **71** des Zwischenventils **7** und im Kühler **5** verblieben Destillates bewerkstelligt ist. Hierzu ist der auf dem Touchscreen **92** eingestellte fünfte Zeitabschnitt Δt₅₁ von 2 min hinreichend lang gewählt. Im Entlastungsschritt (VI) ist bei Erreichen des gleichgesetzten Grenzdruckes p_{G1} das Zwischenventil **7** geschlossen.

Erst nach Entfernung der Restanteile des kondensierten Chloroforms aus dem Kühler **5** mittels der voreingestellten und automatisch durchgeführten Entlastungsschritte (III) bis (VI) ist ein Trockenziehen des im Verdampfungskolben **2** verblieben Kieselgels im Entlastungsschritt (VII) bewerkstelligbar. Da der Sammelkolben **82** durch das Zwischenventil **7** verschlossen ist, ist ein Rücksieden des Chloroforms in den Kühler **5** ausgeschlossen und ein zu hoher Unterdruck in dem Sammelkolben **81** selbst vermieden. Der Sammelkolben **81** ist mit dem Endbelüftungsventil **73** belüftbar. Somit ist auch eine zu hohe Gaslast von Chloroform in dem Systemdruckerzeuger **6** vermieden.

Für den in der **Fig. 7** dargestellten Entlastungsschritt (VII) ist auf dem Touchscreen **92** ein Endzeitabschnitt Δt_{E} von 120 min und ein Enddruck pε von 5 mbar eingestellt. Der Endzeitabschnitt Δt_{E} so hinreichend lang gewählt, dass bei einer kontinuierlichen Druckerniedrigung von dem Grenzdruck p_{G1} auf den Enddruck pε ein vollständiges Entfernen von Chloroform aus dem Kieselgel ohne ein eruptives Durchschießen des Kieselgels in den Kühler **5** realisierbar ist. Hierbei ist in dem Entlastungsschritt (VII) das Zwischenventil **7** geschlossen, um im Falle eines Durchschießens des Kieselgels dessen einfachere Wiedergewinnung aus dem Rotationsverdampfer **1** zu gewährleisten, das Zwischenventil **7** selbst von Verschmutzung zu verschonen und um den Rotationsverdampfer **1** einfacher reinigen zu können.

Die **Fig. 8** zeigt Ausschnitte aus einem schematischen Systemdruck-Zeit-Diagramm einer Destillation einer Mischung aus Ethanol und Toluol bei einer Temperatur T_{V} von konstant 40° über den Gesamtzeitabschnitt Δt_{ges} dieses Gesamtprozesses, welche mit dem vorgeschlagenen Rotationsverdampfer **1** automatisch ausgeführt ist. In die **Fig. 8** ist der Gesamtzeitabschnitt Δt_{ges} dieses Gesamtprozesses nicht eingezeichnet. Hierbei handelt es sich um einen zweischrittigen Prozess (n = 2). Der erste Schritt (i = 1) umfasst die Regelungsschritte (I) bis (VI), wobei der eigentlich auf den Entlastungsschritt (VI) folgende Entlastungsschritt (VII) dem Prozessschritt (I) des zweiten Schrittes (i = 2) entspricht. Der zweite Schritt (i = 2) umfasst somit die Regelungsschritte (I) bis (VII). Das Zwischenventil **7** ist bei der Durchführung des Prozessschrittes (I) im ersten (i = 1) und im zweiten Schritt (i =2) automatisch geschlossen, bei der Durchführung der Prozessschritte (II) im ersten (i = 1) und im zweiten Schritt (i =2) automatisch geöffnet, bei der Durchführung der Entlastungsschritte (III) bis (V) im ersten (i = 1) und im zweiten Schritt (i =2) automatisch geöffnet und bei der Durchführung der Entlastungsschritte (VI) im ersten (i = 1) und im zweiten Schritt (i =2) zu Beginn geöffnet und bei Erreichen der jeweiligen gleichgesetzten Grenzdrücke p_{G1} und p_{G2} geschlossen. Bei der Durchführung des Entlastungsschritte (VII) im zweiten Schritt (i = 2) ist das Zwischenventil **7** verschlossen.

Für die Destillation in der **Fig. 8** sind für die Entlastungsschritte (III) bis (VI) auf dem Touchscreen **92** ein gemeinsamer Haltedruck-Faktor f_{H} von 1,2 für einen Haltedruck p_{H1} im ersten Schritt (i = 1) und für einen Haltedruck p_{H2} im zweiten Schritt (i = 2) sowie ein gemeinsamer gleichgewählter Anteilsfaktor f_{G} von 0,8 für einen gleichgesetzten Grenzdruck p_{G1} im ersten Schritt (i = 1) und für einen gleichgesetzten Grenzdruck p_{G2} im zweiten Schritt (i = 2) eingestellt. Somit weisen der Haltedruck p_{H1} und der gleichgesetzte Grenzdruck p_{G1} im ersten Schritt (i = 1) als auch der Haltedruck p_{H2} und der gleichgesetzte Grenzdruck p_{G2} im zweiten Schritt (i = 2) jeweils ein gleiches Größenverhältnis von 1,5 zueinander auf. Mit den Entlastungsschritten (III) bis (VI) ist im ersten Schritt (i = 1) eine vollständige Entfernung von Restanteilen an kondensiertem Ethanol und im zweiten Schritt (i = 2) eine vollständige Entfernung von Restanteilen an kondensiertem Toluol an der Eingangsverbindung **71** des Zwischenventils **7** und im Kühler **5** realisiert.

In der **Fig. 8** ist für den Prozessschritt (I) des ersten Schrittes (i = 1) der Destillation ein erster Zeitabschnitt Δt₁₁ von 20 min ausgehend von einem eingestellten Anfangsdruck p_{A} von 1000 mbar auf dem Touchscreen **92** gewählt, um eine Aufwärmung des Flüssigkeitsgemisches in dem Verdampfungskolben **2** auf 40° C zu bewerkstelligen. Auf dem Touchscreen **92** ist für den ersten Schritt (i = 1) ein Prozessdruck p_{P1} von 175 mbar eingestellt, welcher dem Siededruck von Ethanol bei 40° C entspricht. Für den Prozessschritt (II) des ersten Schrittes (i = 1) ist ein zweiter Zeitabschnitt Δt₂₁ von 40 min eingestellt, um ein vollständiges Abdestillieren von Ethanol in den ersten Sammelkolben **81** zu gewährleisten. Mit dem Endbelüftungsventil **74** ist der Sammelkolben **81** belüftbar. Für die Entlastungsschritte (III) bis (VI) im ersten Schritt (i = 1) ist durch das Steuermodul **9** mittels des gemeinsamen gleichgewählten Anteilsfaktors f_{G} der Grenzdruck p_{G1} auf 140 mbar und mittels des gemeinsamen Haltedruck-Faktor f_{H} der Haltedruck p_{H1} auf 210 mbar automatisch eingestellt.

Für den Prozessschritt (I) des zweiten Schrittes (i = 2) der Destillation in der **Fig. 8** ist ein erster Zeitabschnitt Δt₁₂ von 15 min ausgehend von dem Grenzdruck p_{G1} des ersten Schrittes (i = 1) gewählt, um eine möglichst vollständige Entfernung von Ethanol aus der Gasphase in dem Verdampfungskolben **2** und in dem Kühler **5** zu realisieren. Auf dem Touchscreen **92** ist für den zweiten Schritt (i = 2) der Destillation ein Prozessdruck p_{P2} von 77 mbar eingestellt, welcher dem Siededruck von Toluol bei 40° C entspricht. Für den Prozessschritt (II) des zweiten Schrittes (i = 2) ist ein zweiter Zeitabschnitt Δt₂₂ von 60 min eingestellt, um ein vollständiges Abdestillieren von Toluol in den zweiten Sammelkolben **82** sicherzustellen. Mit dem Endbelüftungsventil **75** ist der Sammelkolben **82** belüftbar. Für die Entlastungsschritte (II) bis (VI) im zweiten Schritt (i = 2) ist durch das Steuermodul **9** mittels des gemeinsamen gleichgewählten Anteilsfaktors f_{G} der Grenzdruck p_{G2} auf 62 mbar und mittels des gemeinsamen Haltedruck-Faktor f_{H} der Haltedruck p_{H2} auf 92 mbar automatisch eingestellt.

Der Entlastungsschritt (VII) des zweiten Schrittes (i = 2) in der **Fig. 8** umfasst die Absenkung von dem Grenzdruck p_{G2} auf den auf dem Touchscreen **92** eingestellten Enddruck p_{E} von 10 mbar. Hierfür ist ein Endzeitabschnitt Δt_{E} von 5 min auf dem Touchscreen **92** eingestellt.

Durch das Verschließen des Zwischenventils **7** nach der Durchführung der Prozessschritte (II) und der Entlastungsschritte (III) bis (VII) ist ein Rücksieden von Ethanol aus dem Sammelkolben **81** und von Toluol aus dem Sammelkolben **82** in den Kühler **5** sowie ein hoher Unterdruck in den Sammelkolben (**81**, **82**) verhindert.

### Bezugszeichenliste

- **1**: Rotationsverdampfer
- **2**: Verdampfungskolben
- **3**: Elektromotor
- **31**: Dampfrohr
- **4**: Temperierbad
- **5**: Kühler
- **51**: Kühlspirale
- **52**: Schraubverbindung
- **53**: Schraubverbindung
- **6**: Systemdruck-Erzeuger
- **61**: Vakuum-Membranpumpe
- **62**: Regelungsventil
- **63**: Belüftungsventil
- **64**: Manometer
- **65**: Rohrverbindung
- **7**: Zwischenventil
- **71**: Eingangsverbindung
- **72**: Ausgangsverbindung
- **73**: Ausgangsverbindung
- **74**: Endbelüftungsventil
- **75**: Endbelüftungsventil
- **81**: Sammelkolben
- **82**: Sammelkolben
- **83**: Sammelkolben
- **9**: elektronisches Steuermodul
- **91**: Display
- **92**: Touchscreen
- **93**: Taste
- **10**: Verteilerspinne
- **110**: elektrische Steuerleitung vom Steuermodul **9** zur Vakuum-Membranpumpe **61**
- **111**: elektrische Steuerleitung vom Steuermodul **9** zum Regelungsventil **62**
- **112**: elektrische Steuerleitung vom Steuermodul **9** zum Belüftungsventil **63**
- **113**: elektrische Steuerleitung vom Steuermodul **9** zum Manometer **64**
- **114**: elektrische Steuerleitung vom Steuermodul **9** zum Zwischenventil **7**
- **115**: elektrische Steuerleitung vom Steuermodul **9** zum Endbelüftungsventil **74**
- **116**: elektrische Steuerleitung vom Steuermodul **9** zum Endbelüftungsventil **75**
- **117**: elektrische Steuerleitung vom Steuermodul **9** zum Elektromotor **3**
- **118**: elektrische Steuerleitung vom Steuermodul **9** zum Temperierbad **4**

## Patentansprüche

1. Rotationsverdampfer (**1**), aufweisend einen Systemdruck-Erzeuger (**6**), ein zwischen einem Kühler (**5**) und jedem Sammelkolben (**81**, **82**, **83**) direkt oder indirekt geschaltetes Zwischenventil (**7**), ein Steuermodul (**9**) ausgebildet zur elektronischen Steuerung des Systemdruck-Erzeugers (**6**) und des Zwischenventils (**7**) sowie optional eines Temperierbades (**4**) **dadurch gekennzeichnet, dass** das Steuermodul (**9**) zur automatischen Durchführung nachfolgender Entlastungsschritte (III) bis (VII) in der angegeben Reihenfolge innerhalb eines Schrittes i oder als ein separater Schritt i von jeweils n aufeinanderfolgenden Schritten eines Gesamtprozesses ausgebildet und programmiert ist:
(III) bei geöffnetem Zwischenventil (**7**) Senkung eines ersten Systemdruckes p_{S1i} auf einen ersten Grenzdruck p_{Gai} innerhalb eines vorrausgehenden entlastenden Zeitabschnittes Δt₃ᵢ,
(IV) bei geöffnetem Zwischenventil (**7**) Erhöhung des Grenzdruckes p_{Gai} auf einen Haltedruck p_{Hi} in einem nachfolgenden entlastenden Zeitabschnitt Δt₄ᵢ,
(V) bei geöffnetem Zwischenventil (**7**) Halten des Haltedruckes p_{Hi} für einen nächsten entlastenden Zeitabschnitt Δt₅ᵢ,
(VI) bei geöffnetem Zwischenventil (**7**) Senkung Haltedruckes p_{Hi} auf einen zweiten Grenzdruck p_{Gbi} in einem weiteren entlastenden Zeitabschnitt Δt₆ᵢ und bei Erreichen des zweiten Grenzdruckes p_{Gbi} Schließen des Zwischenventils (**7**),
(VII) bei geschlossenem Zwischenventil (**7**) Regelung des zweiten Grenzdruckes p_{Gbi} auf einen zweiten Systemdruck p_{S2i} innerhalb eines abschließenden entlastenden Zeitabschnittes Δt₇ᵢ,
wobei i eine natürliche Zahl von 1 bis n ist und n ebenfalls einer natürlichen Zahl von 1 bis zur Anzahl der mit dem Rotationsverdampfer durchführbaren Schritte i bezüglich gleicher, teilweise gleicher oder verschiedener Operationen innerhalb eines Gesamtprozesses entspricht, wobei mit dem Steuermodul (**9**) der erste Systemdruck psii, der zweite Systemdruck p_{S2i}, der erste Grenzdruck p_{Gai}, der Haltedruck p_{Hi}, der zweite Grenzdruck p_{Gbi}, und der Zeitabschnitt Δt₅ᵢ einstellbar oder der erste Grenzdruck p_{Gai}, der Haltedruck p_{Hi} und der zweite Grenzdruck p_{Gbi} automatisch in Bezug auf den ersten Systemdruck psii festlegbar sind, die Zeitabschnitte Δt₃ᵢ, Δt₄ᵢ, und Δt₆ᵢ jeweils als Umschaltzeiten auf dem Steuermodul (**9**) festgelegt sind, der Zeitabschnitt Δt₇ᵢ mit dem Steuermodul (**9**) einstellbar ist oder als Umschaltzeit festlegbar ist oder alternativ, für einen zweiten Systemdruck p_{S2i} gleich oder kleiner als der zweite Grenzdruck p_{Gbi}, auf dem Steuermodul (**9**) die Zeitabschnitte Δt₆ᵢ und Δt₇ᵢ als einen einer Umschaltzeit entsprechenden zusammengefassten entlastenden Zeitabschnitt (Δt₆ + Δt₇)ᵢ in Form eines zusammengefassten endlastenden Endschrittes [(VI) + (VII)] festgelegt oder einstellbar sind.

2. Rotationsverdampfer (**1**) nach Anspruch 1 **dadurch gekennzeichnet, dass** der erste Grenzdruck p_{Gai} des Schrittes i gleich dem zweiten Grenzdruck p_{Gbi} desselben Schrittes i ist und somit einem gleichgesetzten Grenzdruck p_{Gi} des Schrittes i entspricht (p_{Gai} = p_{Gbi} = p_{Gi}).

3. Rotationsverdampfer (**1**) nach einem der Ansprüche 1 oder 2 **dadurch gekennzeichnet, dass** das Steuermodul (**9**) zur automatischen Durchführung der Entlastungsschritte (III) bis (VII) durch manuelle Auslösung eines Entlastungsbefehles zu einem beliebigen Zeitpunkt t₁ mit einem ersten Systemdruck psii eines Gesamtprozesses ausgebildet sowie programmiert ist und der erste Systemdruck psii dem zweiten Systemdruck p_{S2i} gleichgesetzt ist, wobei ein Zeitabschnitt Δt₅ᵢ auf dem Steuermodul (**9**) voreinstellbar oder durch eine Schaltungsdauer einer betätigten Schaltungseinrichtung (**93**) während einer Durchführung des Entlastungsbefehles wählbar ist und wobei die Zeitabschnitte Δt₆ᵢ und Δt₇ᵢ jeweils unabhängig voneinander sind und jeweils auf dem Steuermodul (**9**) als eine Umschaltzeit festgelegt sind.

4. Rotationsverdampfer (**1**) nach einem der Ansprüche 1 oder 2 **dadurch gekennzeichnet, dass** das Steuermodul (**9**) zur einmaligen und zur mehrmaligen automatischen Durchführung nachfolgender Prozessschritte (I) und (II) sowie der Entlastungsschritte (III), (IV), (V), (VI) und (VII) in der angegebenen Reihenfolge innerhalb eines Schrittes i von jeweils n aufeinanderfolgenden Schritten innerhalb eines Gesamtprozesses ausgebildet und programmiert ist:
(I) Bei geschlossenem Zwischenventil (**7**) Senkung eines Anfangsdruckes p_{A} oder eines zweiten Grenzdruckes p_{Gb(i-1)} oder eines gleichgesetzten Grenzdruckes p_{G(i-1)} des dem jeweiligen Schritt i vorgelagerten Schrittes (i-1) auf einen Prozessdruck p_{Pi} innerhalb eines ersten Zeitabschnittes Δt₁ᵢ,
(II) bei geöffnetem Zwischenventil (**7**) Halten des Prozessdruckes p_{Pi} für einen zweiten Zeitabschnitt Δt₂ᵢ,
(III) bei geöffnetem Zwischenventil (**7**) Senkung des Prozessdruckes p_{Pi} auf einen ersten Grenzdruck p_{Gai} oder auf einen gleichgesetzten Grenzdruck p_{Gi} innerhalb eines dritten Zeitabschnittes Δt₃ᵢ,
(IV) bei geöffnetem Zwischenventil (**7**) Erhöhung des ersten Grenzdruckes p_{Gai} oder des gleichgesetzten Grenzdruckes p_{Gi} auf einen Haltedruck p_{Hi} in einem vierten Zeitabschnitt Δt₄ᵢ,
(V) bei geöffnetem Zwischenventil (**7**) Halten des Haltedruckes p_{Hi} in einem fünften Zeitabschnitt Δt₅ᵢ,
(VI) bei geöffnetem Zwischenventil (**7**) Senkung des Haltedruckes p_{Hi} auf einen zweiten Grenzdruck p_{Gbi} oder wieder auf den gleichgesetzten Grenzdruck p_{Gi} in einem sechsten Zeitabschnitt Δt₆ᵢ und bei Erreichen des zweiten Grenzdruckes p_{Gbi} oder des gleichgesetzten Grenzdruckes p_{Gi} Schließen des Zwischenventils (**7**),
(VII) Prozessschritt (I) ausgehend von dem zweiten Grenzdruck p_{Gbi} oder dem gleichgesetzten Grenzdruck p_{Gi} gefolgt von dem Prozessschritt (II) und der Entlastungsschritte (III) bis (VII) in der vorbenannten Reihenfolge für jeweils den dem Schritt i nachgelagerten Schritt (i+1) und nach Durchlaufen des letzten Schrittes (i = n) Absenkung des letzten zweiten Grenzdruckes p_{Gbn} oder des letzten gleichgesetzten Grenzdruckes p_{Gn} auf einen Enddruck p_{E} in einem Endzeitabschnitt Δt_{E},
wobei n einer natürlichen Zahl von 1 bis zur Anzahl der trennbaren Fraktionen einer Flüssigkeitsmischung entspricht, wobei jeweils auf dem Steuermodul (**9**) der Anfangsdruck p_{A} einstellbar oder durch den Atmosphärendruck gegeben ist, der Enddruck pε einstellbar ist, der Endzeitabschnitt Δt_{E} einstellbar oder als Umschaltzeit festlegbar ist, jeder Zeitabschnitt Δt₁ᵢ einstellbar oder als Umschaltzeit festlegbar oder festgelegt ist sowie jeder Prozessdruck p_{Pi} und jeder Zeitabschnitt Δt₂ᵢ einstellbar ist.

5. Rotationsverdampfer (**1**) nach Anspruch 4 **dadurch gekennzeichnet, dass** das Steuermodul (**9**) zur wahlweisen automatischen Durchführung der Entlastungsschritte (VI) und (VII) als ein zusammengefasster endlastender Endschritt [(VI) + (VII)] für mindestens einen Schritt i oder für alle n Schritte i ausgebildet ist.

6. Rotationsverdampfer (**1**) nach einem der Ansprüche 1 bis 5 **dadurch gekennzeichnet, dass** das Steuermodul (**9**) zur Einstellung der Temperatur Tv des Temperierbades (**4**) auf einen konstanten Wert oder auf einen linear oder graduell von einer Anfangstemperatur T_{A} auf eine Endtemperatur T_{E} steigenden Verlauf ausgebildet ist.

7. Rotationsverdampfer (**1**) nach einem der Ansprüche 1 bis 6 **dadurch gekennzeichnet, dass** das Zwischenventil (**7**) als elektronisch steuerbares Magnetventil ausgebildet ist, über eine Flanschverbindung oder Schraubverbindung mit dem Kühler (**5**) und entweder direkt oder über eine Verteilervorrichtung (**10**) jeweils über eine lösbare Verbindung mit jedem Sammelkolben (**81**, **82**, **83**) verbunden ist.

8. Rotationsverdampfer (**1**) nach einem der Ansprüche 1 bis 7 **dadurch gekennzeichnet, dass** das jeder Sammelkolben (**81**, **82**, **83**) über mindestens ein Endbelüftungsventil (**74**, **75**) belüftbar ist, wobei jedes Endbelüftungsventil (**74**, **75**) als elektronisch steuerbares Magnetventil ausgebildet ist und wobei jedes Endbelüftungsventil (**74**, **75**) autonom mit dem Steuermodul regelbar ist.

9. Elektronisches Steuermodul (**9**) für den Rotationsverdampfer (**1**) nach einem der Ansprüche 1 bis 8 ausgebildet zur Einstellung und automatischen Steuerung nachfolgender Regelungsschritte in der angegebenen Reihenfolge:
- optional: Prozessschritt (I) mit dem darauffolgenden Prozessschritt (II),
- Entlastungsschritt (III),
- Entlastungsschritt (IV),
- Entlastungsschritt (V),
- Entlastungsschritt (VI),
- Entlastungsschritt (VII).

10. Elektronisches Steuermodul (**9**) nach Anspruch 9 **gekennzeichnet durch** ein Display (**91**), welches zur Einstellung, zur Anzeige sowie optional zur graphischen Darstellung der Regelungsschritte als auch optional zur graphischen Darstellung des Verlaufes des Systemdruckes ps in Abhängigkeit von der Zeit t bezüglich durchgeführter Regelungsschritte ausgebildet ist, wobei das Display (**91**) zur Einstellung der Regelungsschritte einen Touchscreen (**92**) aufweist.

11. Verfahren zur fraktionierten Destillation einer Flüssigkeit oder einer Flüssigkeitsmischung automatisch durchführbar mit dem Rotationsverdampfer (**1**) nach den Ansprüchen 1 bis 10 **gekennzeichnet durch** nachfolgende Verfahrensschritte ausführbar in der angegebenen Reihenfolge:
- Prozessschritt (I),
- Prozessschritt (II),
- Entlastungsschritt (III),
- Entlastungsschritt (IV),
- Entlastungsschritt (V),
- Entlastungsschritt (VI),
- Nachregelungsschritt (VII).
